(19) **Europäisches Patentamt**
**European Patent Office**
**Office européen des brevets**

(11) **EP 4 787 775 A1**

(12) **EUROPEAN PATENT APPLICATION**

(43) Date of publication:
**05.08.2026 Bulletin 2026/32**

(21) Application number: **26151488.9**

(22) Date of filing: **13.01.2026**

(51) International Patent Classification (IPC):
**H04L 9/40** (2022.01)   **H04L 41/12** (2022.01)
**H04L 43/12** (2022.01)   H04L 43/0864 (2022.01)
**H04L 43/106** (2022.01)

(52) Cooperative Patent Classification (CPC):
**H04L 63/0853; H04L 41/12; H04L 43/10;**
**H04L 43/12; H04L 63/0876; H04L 63/1408;**
**H04L 63/18;** H04L 43/0864; H04L 43/106

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **03.02.2025 IL 31880125**

(71) Applicants:
• **FUJITSU LIMITED**
**Kawasaki-shi, Kanagawa 211-8588 (JP)**
• **B.G. Negev Technologies and Applications Ltd.**
**8410501 Beer Sheva (IL)**

(72) Inventors:
• **OTUNG, Andikan**
**Slough, SL1 2BE (GB)**
• **MANOR, Ofir**
**Slough, SL1 2BE (GB)**
• **SCHWARTZ, Tomer**
**Slough, SL1 2BE (GB)**
• **ELOVICI, Yuval**
**8410501 Beer Sheva (IL)**
• **PUZIS, Rami**
**8410501 Beer Sheva (IL)**

(74) Representative: **Haseltine Lake Kempner LLP**
**Cheapside House**
**138 Cheapside**
**London EC2V 6BJ (GB)**

(54) **ACTIVE INTERMEDIATE CONNECTION (VPN) DETECTION BY A SERVER**

(57)    A computer implemented method for determining an origin of indication information in a networked connection between a client device and a server, comprising: receiving, at the server, the indication information of the client device, determining a client-server value based on a transmission time of a connection signal transmitted between the client device and the server, transmitting a tracing signal addressed to the indication information via a particular router in the networked connection between the client device and the server, determining a tracing value based on a transmission time of the tracing signal to the particular router, establishing whether the indication information originates from an intermediate connection in the networked connection or from the client device by comparing a difference value with a threshold value, the difference value being based on the client-server value and tracing value.

400 →

Receiving, at the server, the indication information of the client device; — S410

Determining a client-server value based on a transmission time of a connection signal transmitted between the client device and the server; — S420

Transmitting a tracing signal addressed to the indication information via a particular router in the networked connection; — S430

Determining a tracing value based on a transmission time of the tracing signal to the particular router; — S440

Establishing whether the indication information originates from an intermediate connection in the networked connection or from the client device by comparing a difference with a threshold value, the difference value being based on the client-server value and probing value. — S450

Figure 4

EP 4 787 775 A1

## Description

### Technical field

The present invention relates to methods of determining an origin of indication information in a network. In particular, the invention relates to methods of determining an origin of indication information in a networked connection between a client device and a server and to a corresponding computer program and information processing apparatus.

### Background

Active IP Geolocation is the process of geolocating a device on the Internet by probing it or interacting with it. However certain users may attempt to distort their perceived location. This is possible because communication over the internet can be direct, where a device (often referred to as a client device and belonging to the user) sends packets directly to the server, or indirect where the client device sends packets directly to a third party (intermediate) device, which then relays the communication to the server. In such communications, the destination IP address of the packet leaving the client device and that of the packet leaving the server are both that of the third party relay device. Examples of such third party relay devices include Proxy servers or VPN servers or even the TOR Network.

A VPN (Virtual Private Network) is a mechanism used to create a secure connection between a computer/network (such as the client/client device referred to herein) and another network over an insecure connection medium (usually the public internet). The connection is secured using a virtual PTP (point to point) connection to a secure server using tunnelling protocols. Through VPN usage, the original IP of the connecting client device is obfuscated/hidden and the client is virtually connected to the target network.

Thus, a VPN server can run software that forwards network traffic while obfuscating the source of the communication. VPNs have many practical uses, but some can be malicious. Users typically employ indirect communication to conceal information about themselves from the ultimate destination server with which they are indirectly communicating. Information that VPN's/Proxies are able to conceal from the end server include the location of the client device and the IP address of the client device. Indirect communication may also prevent the access network of the client device from knowing which end destination server the client device is communicating with.

VPN servers can be used by malicious actors to hide their identity and by spoofing the source IP of the connection, the location of client device is effectively spoofed as well. Therefore, to detect/prevent spoofing of geolocation, VPN/Proxy detection is needed. VPN Detection may especially be important for services that use geolocation as a security factor such as zero trust infrastructure and fraud prevention services. The Zero Trust security global market was valued at 26.45 billion dollars and is projected it to reach 162.91 billion dollars by 2032 (https://www.emergenresearch.com/industry-report/zero-trust-security-market (accessed May. 19, 2024)), similarly the fraud detection and prevention market size was valued at 36.89 billion dollars in 2022 and is projected to grow to 182.66 billion dollars by 2030 (https://www.fortunebusinessinsights.com/industry-reports/fraud-detection-and-prevention-market-100231 (accessed May. 19, 2024)) and IP Geolocation is a growing market that's expected to reach $7.4bn by 2031 (see for example https://www.alliedmarketresearch.com/ [Accessed 18 September 2024]).

Client obfuscation with the use of a VPN or proxy service may be a critical weakness of IP Geolocation as a security factor. When a client is using a VPN to connect to a server, the IP observed on the server-side is the IP of the VPN and not of the client itself. This means that the geolocation of the "client's" IP address will return the location of the VPN server instead. This "flaw" can be used to effectively circumvent geolocation-based defences. The obfuscation can allow clients to virtually change their perceived geographical location and thus gain access to services that are geographically locked (government services, financial services, content streaming, etc). For these reasons VPN Detection is a constant and pressing issue for secure services that require high levels of trust.

Existing solutions to detect when a VPN is being used by a client generally use passive solutions which hold ranks for, or score, internet protocol (IP) addresses that are known to hold VPNs/Proxies. For example, existing methods may use APIs which use known IP databases as well as behavioral analysis to detect VPN/proxy usage. Some known services collect data over time and analyze communication combined with public information to create risk scores and proxy/VPN assessments. However, these methods are often not robust enough for truly sensitive services and can be bypassed.

It is therefore desirable to improve the ability for services (for example from a server) to detect when a VPN is being used by a client (client device).

### Summary of the invention

The invention is defined in the independent claims, to which reference should now be made. Further features are set out in the dependent claims.

According to a first aspect there is provided a computer implemented method for determining an origin of indication information in a networked connection between a client device and a server. The method comprises the steps of: receiving or causing reception of, at the server, the indication information of the client device, determining a client-server value based on a transmission time of a connection signal transmitted between the client device and the server, transmitting or causing transmission of a tracing signal addressed to the indication information via a particular router in the networked connection between the client device and the server, determining a tracing value based on a transmission time of the tracing signal to the particular router, and establishing whether the indication information originates from an intermediate connection in the networked connection or from the client device by comparing a difference value with a threshold value, the difference value being based on the client-server value and tracing value.

According to another aspect there is provided a computer implemented method for determining origin of indication information in a networked connection between a client device and a server, comprising: receiving or causing reception of, at the server, the indication information of the client device; determining a client-server value based on a transmission time of a connection signal transmitted between the client device and the server; transmitting or causing transmission of, by the server, a Packet Internet or Inter-Network Groper (PING) message in the networked connection addressed to the indication information; transmitting or causing transmission of a tracing signal to a particular router in the networked connection between the client device and the server when an elapsed time for receiving PING response message is exceeded; determining a tracing value based on a transmission time of the tracing signal; establishing whether the indication information originates from an intermediate connection in the networked connection or from the client device by comparing a difference value with a threshold value, the difference value being based on the client-server value and tracing value.

## Brief description of the drawings

Reference is made, by way of example only, to the accompanying drawings in which:

**Figure 1a** shows an example configuration of a virtual private network in a network;

**Figure 1b** shows a client-server handshake procedure, a client-proxy handshake procedure, and a client-VPN handshake procedure;

**Figure 2** shows steps of a method for determining an origin of indication information in a networked connection between a client device and a server;

**Figure 3** shows an example implementation of the method for determining an origin of indication information in a networked connection between a client device and a server;

**Figure 4** shows a flow chart of steps of another method for determining an origin of indication information in a networked connection between a client device and a server;

**Figure 5** shows an example implementation of the another method for determining an origin of indication information in a networked connection between a client device and a server;

**Figures 6a - 6c** show a further implementation of the another method for determining an origin of indication information in a networked connection between a client device and a server;

**Figure 7** shows an example coordination between probes and a server to obtain transmission delays in the network connection;

**Figures 8a-8c** show flow charts of an implementation of the methods described herein;

**Figure 9** shows another flow diagram for implementing the methods described herein;

**Figure 10** shows an architecture for performing the methods described herein;

**Figure 11** shows a block diagram of an information processing apparatus or a computing device or server.

## Detailed description

The following non-limiting definitions may be useful for understanding terminology used throughout the description.

IP Geolocation - may also be known as network or internet or device localization or geolocation, and is the process of finding the geographic location of a connected device on the internet by performing (active or interactive) measurements. That is, IP Geolocation is the process of locating a device based on information that can be obtained or inferred, for example using its IP (internet protocol) address.

In the realm of internet security, IP geolocation has been used both as a means of attack (profiling victims in order to lure them into an attack), or as a security factor, an idea which has gained traction in the past decade (especially in the Fraud prevention and Zero Trust markets). IP Geolocation techniques may be broadly separated into three categories: passive, active, and hybrid.

- Passive techniques leverage information that can be analysed based on the IP address alone without the need to communicate with the device directly.
- Active approaches tend to use probes to measure the delay to the target. Based on the data collected and delay to distance models, an estimation of the target device location is generated.
- Hybrid techniques combine the two methods and use prior data collection and machine learning models to improve the results of active measurements.

Probes - (also referred to as Landmarks, Beacons or Anchors) are nodes, whose locations are known, that participate in a detection process.

VPN - A virtual private network (VPN) is a mechanism for creating a secure connection between a computing device (client device) and a computer network, or between two networks, using an insecure communication medium such as the public Internet.

VPN Server/Service - A virtual private network (VPN) service provides a proxy server which may help users bypass internet censorship such as geo-blocking and users who want to protect their communications against data profiling or MitM attacks on hostile networks.

RTT - round-trip delay (RTD) or round-trip time (RTT) is the amount of time it takes for a signal to be sent plus the amount of time it takes for acknowledgement of that signal to be received. This time delay may include propagation times for the paths between the two communication endpoints. For example, the RTT may measure the time it takes for a network request to go from a starting point to a destination and back again to the starting point. The RTT duration may be measured in milliseconds (ms).

End Client - the end device (e.g., a client device) that a user is using to communicate with a server. In the case of direct communication between a server and a client device, the server will see the IP address of the client device. In the case of indirect communication, the server may only see the IP address of the intermediary device (VPN/Proxy server) and not that of the client device.

Server - a server that is communicating with an end client, whether directly or indirectly by hosting a server which the client device accesses. For example, the server may host a web page which the client device may request to access.

There is provided herein a computer implemented method for determining an origin of indication information in a networked connection between a client device and a server. The method comprises the steps of: receiving, at the server, the indication information of the client device, determining a client-server value based on a transmission time of a connection signal transmitted between the client device and the server, transmitting a tracing signal addressed to the indication information via a particular router in the networked connection between the client device and the server, determining a tracing value based on a transmission time of the tracing signal to the particular router, and establishing whether the indication information originates from an intermediate connection in the networked connection or from the client device by comparing a difference value with a threshold value, the difference value being based on the client-server value and tracing value.

It may be determined that the indication information originates from the intermediary connection if the difference value is higher than the threshold value. It may be determined that the indication information originates from the client device if the difference value is lower than the threshold value.

The threshold value may be measured in units of time, that is the threshold value may be a time value. The threshold value may be set as 2ms or 5ms. The threshold value may be between 2ms and 5ms (inclusive). The threshold value may be measured in distance and may set as 400km or 1000km or may be between 400km and 1000km.

The indication information may be received during a connection process between the client device and the server. The indication information may be received as part of an initial connection request sent from the client device to the server. For example, the indication information may be comprised in a transmission control protocol header.

A transmission time may be understood as the time taken from transmitting a signal to the signal being received. That is, the time between transmission and reception of a signal.

The indication information may be an internet protocol (IP) address. For example, the indication may be a public IP address. The IP address may be an IPv4 or IPV6 IP address. The indication information may be referred to as location information or location indication information in that the indication information may indicate a location, or origin, of the information. That is, for example, if the indication information is an IP address, the location of the indication information may be obtained using, for instance, an IP location database.

The tracing value is for example a time duration and may be determined based on a round-trip time of a combination of the tracing signal and a tracing signal response. The tracing signal response may be sent from the particular router.

The particular router may be the intermediate connection. The intermediate connection may be responsive to the tracing signal and may send the tracing signal response. The particular router may be an individual router in the networked connection other than the intermediate connection. For instance, the intermediate connection may not be responsive to the tracing signal. The intermediate connection may be configured to purposefully stay hidden in the network, and may therefore not respond to tracing signals.

The tracing signal and tracing signal response may be comprised in a traceroute transmission. The tracing signal may be a user datagram protocol (UDP) packet or Internet Control Message Protocol (ICMP) packet. The tracing signal response may be UDP or ICMP responses.

The networked connection may comprise more than one individual router. Individual tracing signals may be transmitted to more than one individual router in the networked connection, each individual router which receives an individual tracing signal may transmit an individual tracing response, and an individual tracing signal, of the individual tracing signals, with a longest transmission time may be assigned as the tracing signal.

As described above, a transmission time may be the time between sending and receiving a signal. Thus, a longest transmission time may be the longest delay between sending and receiving of an individual tracing signal. It may be assumed that the individual router with the longest transmission time is the individual router which is a furthest distance from the transmission source.

The individual router which receives the assigned tracing signal may be assigned as the particular router. That is, the particular router may be the router which is furthest from the transmission source.

The individual tracing signals may be transmitted by the server. That is, the server may be the transmission source.

The individual tracing signals may be transmitted by the server and by a probe to the same or different individual routers in the networked connection. The server and the probe may be transmission sources. More than one probe may transmit the individual tracing signals.

The server and probe may share the indication information to communicate with the client device. That is, the server may receive the indication information and forward the indication information to the probe(s). The server and probe may form an anycast network. Hence, the indication information may be shared through the anycast network.

In an example, the tracing signal is transmitted by the probe. That is, the individual tracing signal assigned as the tracing signal is an individual tracing signal transmitted by the probe.

A client-probe value, which may also be referred to as a probe-client value, may be (for example a duration of time or a distance) determined based on a transmission time of a probe message sent from the probe to the client device. The difference value may be further based on the client-probe value.

The server may receive a probe message response to the probe message. That is, only the server may receive the probe message response. In other words, the probe may not receive the probe message response.

The probe message may be, for example, a message containing image information. The client device may request information from a website, such as an image (or image part), and the probe may send the image information as the probe message. The probe message response may be an ACK message, acknowledging that the image is received.

A difference between a round-trip time for the probe message and probe message response, and the client-server value may be taken as the transmission time of the probe message. That is, the transmission time of the probe message may be determined by subtracting the client-server value from the roundtrip time of the probe message and probe message response (which travels from the client to the server). The delay in the client device processing the probe message and transmitting the probe message response may be negligible compared with the transmission times of the probe message and probe message response and can thus be ignored.

The round-trip time for the probe message and probe message response may be determined by: recording a first time stamp of a time when the probe message is transmitted, recording a second time stamp of a time when the probe message response is received, and determining the difference in time between the first and second time stamps as the probe message round-trip time.

The client-server value, the client-probe value and the tracing value may be time values. For example, the values may be measured in seconds. The difference value may be calculated as a difference between the client-probe value and the tracing value.

The threshold value may be between 2ms and 5ms (inclusive of 2ms and 5ms). The threshold value may be set depending on the location of the indication information. That is, the geolocation of the indication information may be obtained using, for example, an IP location database. The threshold may then be set depending on the geolocation.

The client-server value may comprise a client-server round-trip time of the connection signal. The client-server value may be determined as half the round-trip time.

The connection signal transmitted between the client device and the server may be at least one of a transmission control protocol, TCP, handshake signal, a secure sockets layer, SSL, handshake signal and a transport layer security, TLS, handshake signal. Any other suitable connection signal may be used. The signal may be a connection signal in that it is used to set up connection between the client device and the server in the network.

If it is established that the indication information originates from the intermediate connection, the client device's network permission may be revoked. If the client is accessing a web page, for example through a URL (uniform resource locator) hosted by the server, the client device's access to a web page may be blocked if the intermediate connection is detected. Additionally or alternatively, the server may limit resources and/or trigger multifactor authentication.

If the VPN-client connection is ended, then further communication from the client may not use the prior VPN IP address, thus the process to detect if a VPN is being used may be triggered again.

The intermediate connection may be at least one of a virtual private network connection, a tor connection, a proxied connection or a tunneling connection. The intermediate connection may be a connection in the network which obfuscates a true identification information of the client device. That is, the intermediate connection may hide a public IP address assigned to the client device from the server.

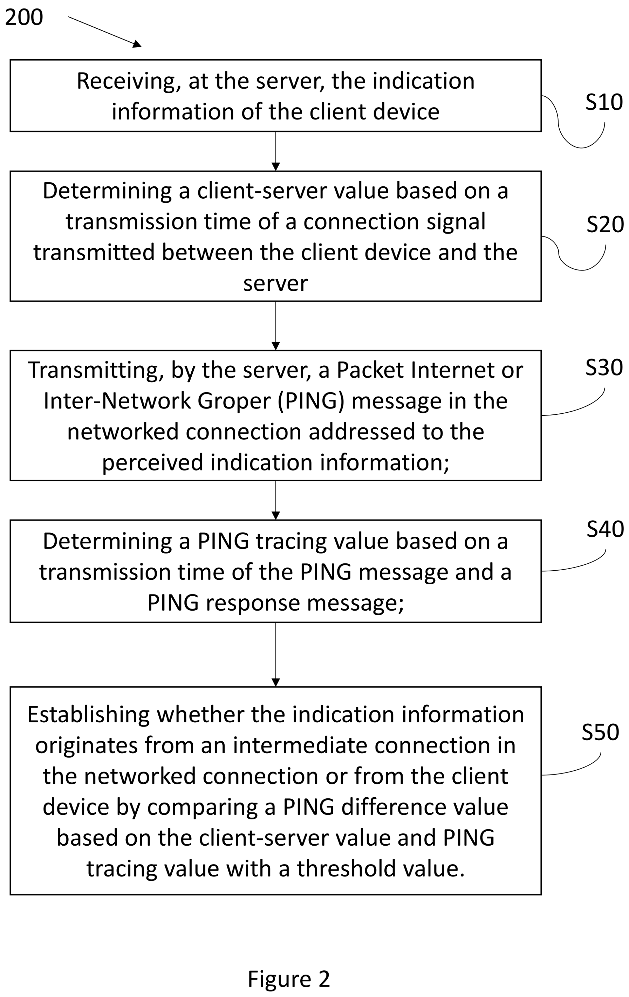

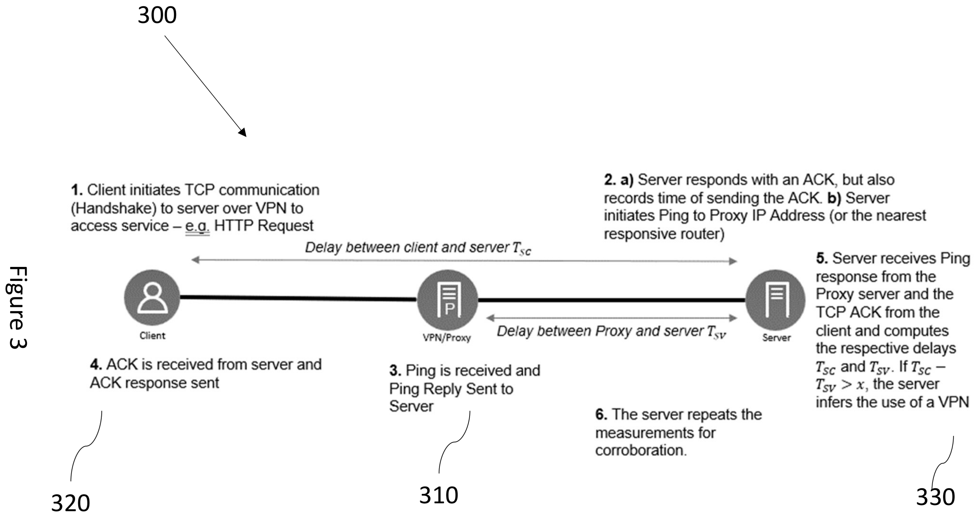

According to a further aspect there is provided a computer implemented method for determining origin of indication information in a networked connection between a client device and a server. The further aspect is described in relation to Figures 2 and 3 below. The computer-implemented method may comprise: receiving, at the server, the indication information of the client device, determining a client-server value based on a transmission time of a connection signal transmitted between the client device and the server, transmitting, by the server, a Packet Internet or Inter-Network Groper (PING) message in the networked connection addressed to the indication information, determining a PING tracing value based on a transmission time of the PING message and a PING response message, establishing whether the indication information originates from an intermediate connection in the networked connection or from the client device by comparing a PING difference value based on the client-server value and PING tracing value with a threshold value.

The inventors found that the above methods may be combined to provide yet another aspect. The combined method may be provided as a computer implemented method for determining origin of indication information in a networked connection between a client device and a server, comprising, receiving, at the server, the indication information of the client device, determining a client-server value based on a transmission time of a connection signal transmitted between the client device and the server, transmitting, by the server, a Packet Internet or Inter-Network Groper (PING) message in the networked connection addressed to the indication information, transmitting a tracing signal to a particular router in the networked connection between the client device and the server when an elapsed time for receiving PING response message is exceeded, determining a tracing value based on a transmission time of the tracing signal, establishing whether the indication information originates from an intermediate connection in the networked connection or from the client device by comparing a difference value with a threshold value, the difference value being based on the client-server value and tracing value.

In essence, the yet further aspect may first perform a PING addressed to the indication information. After sending the PING a timer may be started and, if a designated time elapses and no PING response is received, the yet further aspect may perform features of the first method described above.

Another aspect includes a computer program which, when executed by a computer/ computing device/ teleconference device, causes the device to execute a method of the aspect. The computer program may be stored on a computer-readable medium. The computer-readable medium may be non-transitory.

Another aspect includes a computer program which, when executed by a companion device, causes the companion device to execute a method of the aspect. The computer program may be stored on a computer-readable medium. The computer-readable medium may be non-transitory.

The invention may be implemented in digital electronic circuitry, or in computer hardware, firmware, software, or in combinations thereof. The invention may be implemented as a computer program or a computer program product, i.e. a computer program tangibly embodied in a non-transitory information carrier, e.g. in a machine-readable storage device or in a propagated signal, for execution by, or to control the operation of, one or more hardware modules. A computer program may be in the form of a stand-alone program, a computer program portion, or more than one computer program, and may be written in any form of programming language, including compiled or interpreted languages, and it may be deployed in any form, including as a stand-alone program or as a module, component, subroutine, or other unit suitable for use in a data processing environment.

The invention is described in terms of particular examples/aspects. Other examples/aspects are within the scope of the following claims. For example, the steps of the invention may be performed in a different order and still achieve desirable results.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

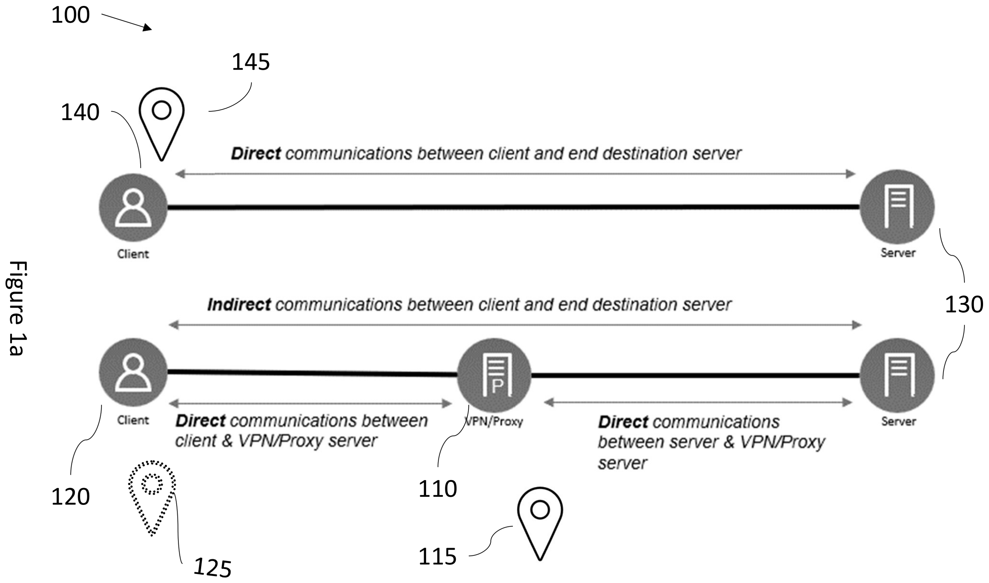

**Figure 1a** shows an example configuration 100 of a virtual private network 110 in a network. The VPN connects a client device 120 with a (web/end) server 130. The client device is, for example, a computer/network/any device capable of accessing the internet. A server may be any device or computer program which provides information to the client device. The information may be a "service" or "resources", for example. That is, the client device and server may function as a client-server model. The VPN may create a secure connection between the client device and the web server (which may be an insecure medium such as the internet).

The VPN may obfuscate/hide the original (true) location 125 of the client device. A device may be geolocated using the (public) IP address associated with the device. Thus, the VPN may 'hide' the location of the client device by replacing the client device IP address with a VPN IP address. That is, the VPN may obfuscate the client device (users) true location through masking of their IP address. A web server communicating with the client device may receive the 'VPN' IP address (that is the IP address assigned to the client device by the VPN) rather than the client device IP address. However, it would be perceived that the IP address received by the web server came from the client device. Thus, if the web server attempted to geolocate the client device 120 using the IP address it would instead determine the location of the VPN (VPN geolocation 115). While the server is referred to as a web server in this example, of course any suitable server may be used.

Since IP geolocation geolocates the device of the public IP address, which may be an intermediate device, the perceived location of the end client may thus be distorted, since it may be located in a different country, or even continent, to the intermediary device relaying the signal (e.g. a VPN).

Geolocation discrepancy detection is the process of detecting if there is a discrepancy between the geolocation of the device with which a server is communicating with and geolocation of the device to which the public IP address that the server is sending packets to belongs. These may not be the same device and may exist in different locations. Thus, the inventors identified two technical challenge of this problem including: 1) knowing if these devices are the same (since all the end server would see is the IP address of the VPN/Proxy, whilst the IP address of the end client remains hidden) and 2) determining the distance between the end client and the intermediary VPN/Proxy, which is a challenge since the server cannot send messages directly to the client. Although the purposes of VPN's/Proxies are many, the inventors focused on their usage for distorting the true location of a client.

Figure 1a also shows an unsecured client device 140. In this example, if the web server were to geolocate the unsecured client device using the IP address of the unsecured client device, the web server could locate the unsecured client device. The device is therefore referred to as an unsecured device in the sense that the IP address may allow the true location of the device to be determined.

To detect the use of VPNs as an intermediary connection between a client device and server in a network, conventional techniques use behavioral analysis and IP ranking approaches. There are multiple solutions for server-side Proxy/VPN Detection, each with their own strengths and weaknesses. Only detection methods that can be implemented from the server side are considered herein. In these examples, the service being accessed is doing the detection and only has access to the communication from the client after it has passed through the VPN/Proxy.

The known solutions may be divided into two main categories. The first is the passive approach which is commonly based on known IP databases (DBs). The DBs can include behavioral analysis data and reputation scores based on reports and passive data collection. The passive data can include raw packet capture in key junctures, offline port scanning, source analysis, etc. Some known methods include

Maxman, SEON, IPQualityScore, etc. Further examples of passive approaches are (https://fingerprint.com/blog/vpn-detection-how-it-works/):

1. **Database Validation** - where users wishing to identify whether a particular IP address is a VPN cross-check that IP address against a database of VPN IP addresses.

2. **Time-zone mismatch** - where time-zone of the public IP address is compared to the local time zone of the web browser that's communicating with the server - which is done using an IP address database and the web browser API, respectively.

3. **OS Mismatch** - By identifying a mismatch between the OS of the browser and the OS deduced by the packets received by the server, the use of a VPN can be inferred.

The inventors found that these approaches require a significant amount of data and time to analyze communication and establish a baseline for analysis. Passive VPN detection methods can detect VPN usage with an accuracy of up to 95-99%. However, passive detection methods require prior knowledge for detection and will likely fail on private or new VPNs until updated (as discussed below).

The second approach is an active detection approach which has multiple techniques.

Active port and service scanning: common VPN solutions/services may have default ports and protocols that can be scanned to determine if a VPN service is running on a server. When a connection is initiated on the server, a scan of the source IP can ideally determine if the client is using a VPN. The inventors found that this method is not robust because the ports and protocols used can be switched with non-default configurations and cause false negatives.

Deep Packet Inspection: VPN usage causes full encapsulation of the original packet, this fact can change the available size for data in the packet and cause a few detectable changes in the transmission control protocol (TCP) headers. Specifically, the maximum transmission unit/maximum segment size (MTU/MSS) fields in the header can shift off the norm. This limitation also causes more variance in the data size and other characteristics of the received packets over time. Deep packet inspection can be implemented on the server using any sniffing tool (i.e. a tool for capturing data sent between a client device and server). However, the inventors identified multiple issues with this approach. The TCP field anomalies can be (and have been) solved with simple configuration/implementation changes. The packet content anomalies are not consistent and require a significant number of packets as well as complex machine learning models to identify with sufficient accuracy.

Delay and RTT measurement: Delay anomaly measurements have been implemented to detect proxies (proxy servers), using RTT measurement of the TCP handshake compared to either the TLS Handshake or application layer communication. Other more intrusive methods can include running JavaScript code that generates new connections to the server (or multiple servers). This technique has proven effective at detecting proxies but has failed to consistently detect VPNs. This is caused by the fact that in a VPN service with no extensions (as discussed previously) the entire communication is encapsulated causing no significant differences in RTT measurement of different protocols or applications.

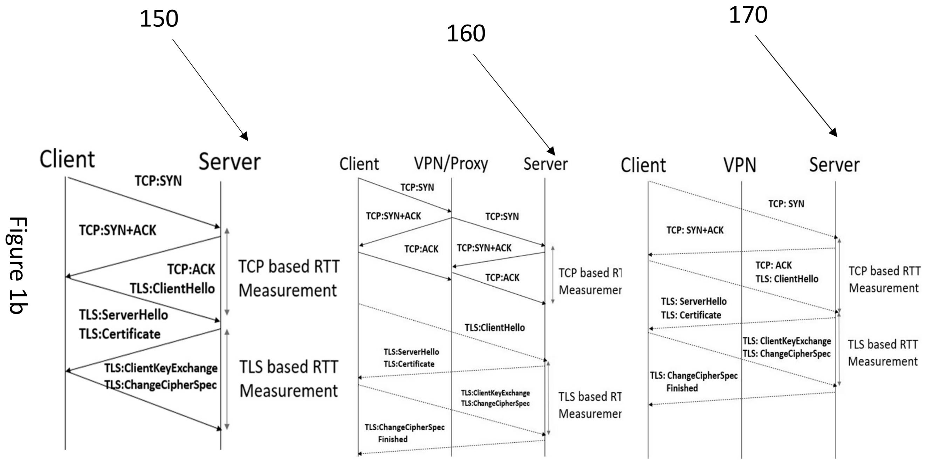

A known approach for proxy detection developed by Elisa Chiapponi et al (Chiapponi, E., Dacier, M., Thonnard, O., Fangar, M., Rigal, V. (2022). BADPASS: Bots Taking ADvantage of Proxy as a Service. In: Su, C., Gritzalis, D., Piuri, V. (eds) Information Security Practice and Experience. ISPEC 2022. Lecture Notes in Computer Science, vol 13620. Springer, Cham.) uses the difference in the round-trip time (RTT) of TCP and TLS handshakes to determine if a proxy is being used. This method can detect the use of Proxies with an accuracy of up to 99%, however it cannot detect VPNs or proxies that do not "break" the TCP connection which does not always happen in VPN connections; such as any VPN solution that implements the core OpenVPN protocol(see Figure 1b). Further, it is limited in the cases where no TLS protocol is used.

Furthermore, the inventors found that when using the above existing approaches, new or private use VPN will initially not be detected and may take a relatively long time to detect (if at all). Furthermore, VPN services can adapt to these analysis methods and change their behaviour/location/IP periodically and avoid detection with minimal effort. For example, a malicious cyber security attack will, in most instances, hide its origin location. One of the best, and most effective, ways to do that is through VPN usage and ideally through a private VPN Server not originating from a well-known VPN Service. In this case, behavioural analysis and IP ranking will have close to no information to analyse on first use and will be practically useless in detecting this kind of VPN usage.

Further limitations of known IP geolocation techniques are as follows. Passive geolocation techniques require extensive amounts of ground-truth data to reach sufficient accuracy. Active techniques require significantly less data but are far more susceptible to network failures, which can cause significant errors. The inventors identified that an underlying assumption of IP Geolocation is that the IP address presented by the target device is the IP assigned to the user's device. The use of VPNs and proxies to obfuscate the client's IP renders geolocation security ineffective. This tends to be true for all IP Geolocation techniques, as both passive and active techniques rely on this underlying assumption. To compensate for this, some IP geolocation include some level of VPN / proxy detection on the server side as a countermeasure.

For the purpose of using geolocation as a security factor, a solution may be incorporated into the authentication process. Practically, the user's experience should not be (significantly) affected via loading times or false positive errors. Potentially most importantly, security standards should be kept, which requires very high accuracy as well as very fast detection speeds. These standards may disqualify the passive approach immediately, the passive method is extremely fast but requires using databases and behavioural analysis, which requires prior knowledge or significant data collection. When encountering new non-mainstream VPN servers, the passive approach may essentially always get a false negative which is unacceptable from a security perspective. Port scanning tends to be unreliable and easily circumvented as discussed above. Deep packet inspection paired with machine learning approaches show promise, but thus far have required a lot of communication flow data to be effective, which tends not to be available in a login process.

A technology application of a VPN detection method is in, for example, zero trust security models. Zero Trust security models rely on IP geolocation as an additional security factor. Specifically, multi-factor authentication (MFA) providers utilize IP geolocation to permit and deny access to certain users based on their location or implement further security restrictions when a user attempts to log in from an anomalous location. Microsoft Azure's Conditional Access policy https://learn.microsoft.com/en-us/entra/identity/conditionalaccess/location-condition (accessed February. 10, 2024) allows organizations to block users from accessing the services from countries and regions that the organization never operates from. Furthermore, the proliferation of national and multinational legislatures on data and user protection (e.g. GDPR) requires certain data to remain within certain borders.

The inventors identified the following challenges when developing a VPN detection solution that is reliable and secure:

- VPNs are purposely hidden: VPNs are purposely used to hide a client's location therefore they are constantly working to stay undetected. Through changing servers/procedures and improving security
- Accuracy: missed detections can have a severe impact on the security of the services as well as user experience
- Speed: user experience should not be affected, therefore the detection needs to be as fast as possible
- Resilience - to what extent can detections persist under the threat of attackers

The inventors found that, so far as it comes to geolocating an end device based on the IP address visible by a server, none of the solutions described above attempt to verify that the location found as a result of active IP geolocation is a reliable representation of the end-client that is in communications with the server. The primary methods used to estimate this are that of VPN/Proxy detection, i.e. detecting if a VPN proxy is being used. However, these methods do not detect if the VPN is far away from the end-client and thus do not answer the question of whether any active IP geolocation can be relied upon. Many VPN detection methods can be mitigated by competent cooperating end clients and VPN service providers because they depend on information that can be forged or concealed (like OS or locale data).

**Figure 1b** shows a client-server handshake procedure 150, a client-proxy handshake procedure 160, and a client-VPN handshake procedure 170.

As described above, VPNs allow private connections over public networks. This may be implemented by encapsulation and encryption of outgoing packet data from the client, which are then unpacked on the VPN server and sent as though they originated from the VPN server. When an answer is returned to the server, it is then encapsulated, encrypted and sent back to the client. This method hides the original IP of the client from the service it is accessing or allows access to internal networks while encrypting sensitive data over public networks.

HTTPS Proxies generate secure connections over the Transport layer. Once a client connects to a proxy, all HTTPS requests are routed through the proxy server which obfuscates the clients IP. The client's requests are sent to the proxy over TCP meaning that the TCP connection is "broken" for each new connection. Thus, both the client and the server generate a TCP handshake (client-proxy handshake 160).

Both VPNs and proxy servers may hide a client's IP address. However, detection of VPN communication poses unique challenges that have not been addressed by proxy detection techniques. VPNs may be viewed as proxies which function over the network layer instead of the transport layer. This means that unlike HTTPS proxies the TCP connection isn't necessarily broken. The difference between direct/Proxy/VPN handshakes is seen in Figure 1b. The core implementations of VPN servers (OpenVPN protocol RFC https://openvpn.net/communityresources/openvpn-protocol/ (accessed March. 12, 2024) for example) encapsulate and tunnel all packets generated by the client and do not break handshakes sent to the server (client-VPN handshake 170). The tunnel created is the cause of the inability of the previous solutions to detect VPN usage. Some VPN services effectively work as proxies, with broken TCP handshakes but tunneled TLS handshakes. This can be seen in use by the NordVPN (https://nordvpn.com/ (accessed February. 10, 2024)) and ExpressVPN services (https://www.privateinternetaccess.com/ (accessed February. 10, 2024)). This method is a useful form of obfuscation because the RTT measured over the TCP connections is the same RTT you would measure in direct connection to the VPN server.

The above VPN servers also tend to respond to ping, meaning that the communication RTT would seem consistent with a direct RTT measurement which makes the server appear benign in a naive detection approach. VPN services with SSL decryption (usually corporate VPNs like Palo-Altos GlobalProtect) break the TLS handshake instead. Causing the TLS RTT to be shorter than the TCP RTT.

**Figure 2** shows steps of a method 200 for determining an origin of indication information in a networked connection between a client device and a server. In other words, the method may detect whether an intermediate connection is being used in a networked connection between a client device and a server. The inventors found that if the end client is in a different location to the device with which the server is in direct communication with, then there is a transmission delay between the end client and the device with which the server is in direct communication with (i.e. the intermediary VPN/proxy server). Should this delay exceed a threshold, the client and intermediary connection are likely in different geographic locations.

The method developed by the inventors diverges from the previous behavioral analysis approaches mentioned above. The method leverages objective indicators of proxied communication which may be detected immediately and consistently from the first use of a VPN server.

VPN usage creates an additional delay in communication based on the physical distance between the client and the VPN server. The method disclosed herein may detect the additional delay in responsive and unresponsive VPN server communication. That is, the method for VPN (intermediate connection) detection may use direct delay measurements of a client's communication from the server-side.

Furthermore, as the indicators identified by the inventors are not behaviorally based, they may be virtually impossible to adapt. Considering the example of a private VPN server that is used to hide cyber-attacks, the method described herein may detect VPN usage immediately, where conventional solutions would fail or take a significant amount of time.

The method for determining the origin of indication information in a networked connection between a client device and a server may comprise the following steps, as shown in Fig. 2.

In a receiving step, S10, a server may receive indication information of a client device. The indication information may be for example an IP (internet protocol) address, for instance a public IP address. The IP address may be, for example IPv4 or IPv6. In an example where an intermediate connection is active, or being used, between the client device and the server, the indication information may be information belonging to the intermediate connection. For example, indication information may be an IP address of the intermediate connection. The intermediate connection may be a VPN. Thus, the intermediate connection may be an IP address of the VPN.

The indication information, for example an IP address, may be sent to the server as part of a packet header of a TCP, transmission control protocol. For example, the client may initiate a request, by entering a URL into a web browser and the web browser may send an HTTP GET request to the server hosting the URL. The request may be sent over the internet using the Transmission Control Protocol (TCP), which includes the client's IP address in the packet headers. The server may receive the request and extract the IP address from the request details.

In an example where the client device does not use an intermediate connection, the indication information may be information belonging to the client device (client device indication information). In an example, the indication information is an IP address of the client device (a client device IP address). The indication information may be referred to as perceived indication information in that the server may not know whether the indication information originates from the client device or whether the information originates from an intermediate connection. In both instances, the server may perceive the indication information as originating from the client device.

In an optional obtaining (or determining) step, a geolocation associated with the indication information may be obtained. The geolocation may be obtained using a geolocation service. For example, the indication information may be mapped onto a physical location. A geolocation database or application programming interface (API) may map indication information onto a location such as a country, region, city, latitude, longitude and so on. The geolocation database or API may be queried to obtain the geolocation associated with the indication information. In an example, the indication information is an IP address and the geolocation associated with the IP address is geolocated using IP based geolocation techniques.

In a determining step S30 a client-server value based on a transmission time of a connection signal transmitted between the server and the client device may be determined. The client-server value may be, for example, the round-trip time for the connection signal sent between the client device and the server. For example, the client may send an initial connection signal to the server. The initial connection signal may contain the indication information. The server may send an acknowledgement (a server ACK) to client device and start a timer. The timer may be stopped when the server receives an acknowledgement (client ACK) return signal from the client device.

The connection signal may be any suitable signal with a property for determining a client-server value. For example, the connection signal may be a TCP handshake signal between the client device and the server. For example, the client device may initialize a TCP connection with the server by sending a TCP:SYN (TPC synchronize) signal. The server may send a TCP SYN + ACK signal in response to acknowledge the signal sent by the client device. The client device may send a further acknowledgment (a TCP ACK) of the signal sent by the server.

The client-server value (which may be a determined value between the client and the server or between the server and the client) may be, for example, a TCP RTT measured using the TCP handshake. The TCP RTT may be measured as the interval between the server sending the TCP SYN + ACK packet and the received client TCP ACK packet.

Following the TCP handshake, an additional (or another) connection signal may be sent. The additional connection signal may be a TLS handshake signal. The client-server value may be determined from an average of the TCP RTT and a TLS RTT or may be determined using the longer or shorter of the TCP RTT and TLS RTT signal. For example, the longer RTT may be used as it may be assumed that the signal belonging to the longer RTT reaches the client device, while the shorter RTT may have broken at a VPN. The TLS handshake may be used as follows to determine the TLS RTT. That is, the TLS handshake may be used for an additional RTT measurement. In another example the additional connection signal may be an SSL handshake signal and the client-server value may be calculated as above using an RTT of the SSL signal.

A sniffing tool may be used to measure the TCP and TLS(/SSL) handshakes. A client-server value may be determined using a detection server (that is a server different from the server hosting the client device). The detection server may run a sniffing tool. The detection server may receive the signals sent between the client device and the server. Additionally or alternatively, the server carrying out the method may determine the client-server value itself, i.e., without using a detection server. Further, the server may determine the client-server value and may forward the client server value to the detection server. The detection server may also receive initial tracing values from the server and/or probes (discussed below). The detection server may therefore establish whether the indication information originates from an intermediate connection in the networked connection or from the client device by comparing the difference value.

During a TLS handshake, the client device may send a client "HELLO" packet to the server. The server may respond with a server "HELLO" packet. The TLS RTT may be determined as the interval between the SERVER HELLO packet sent from the server to the next TLS packet received from the client. The next TLS packet may be include, for example, either the CHANGE CIPHERSPEC or TLS APPDATA FLAG, depending on the TLS Version used in the communication. The above TCP and TLS communications are visualized in Figure 1B.

The inventors identified that both sources (TCP RTT and TLS RTT) may be used for the clients RTT measurement as (as discussed) in different implementations some of the communication may be broken at the VPN/Proxy server, and not tunneled through, which may cause false negative detection if used to detect VPN usage.

The inventors found that the tunneled RTT may be significantly longer than a broken communication which originates from the VPN server and not the client. VPNs that break the TCP connection can be detected as proxies using previous solutions, but the inventors found that previous solutions did not provide a consistent solution that detects all VPN and proxy usage.

Four TCP and TLS RTTs may be measured from (each) client after which the median and minimal RTT may be obtained for the TCP and TLS measurements. The inventors used 4 RTT measurements but any suitable number may be used. By measuring 4 RTTs, the different VPN connection types may be addressed and errors/noise mitigated. The RTTs of the protocol with the longer median RTT may be used as the client-server value. Of course, the RTT of the protocol with the shorter median RTT may be used, or a combination of the RTTs of both protocols.

Additionally or alternatively, the connection signal transmitted between the server and the client device may be a secure socket link, SSL, packet (or a TLS packet depending on the version used by the web server). That is, the client device and server may perform the TCP connection as usual without an RTT being measured. The RTT measurement may begin with the TLS handshake. Depending on the VPN protocol/service for example either the TCP and/or TLS and/or SSL measurement may be used.

A plurality of connection signals may be transmitted between the server and the client device. The plurality of signals may be transmitted to ensure that the RTT is measured as many times as possible to determine, for example, a statistically significant result. To transmit the plurality of signals the length of the handshake between the server and the client device may be extended. The inventors found that the length of the handshake may be extended by separating each step of the handshake into a different packet. This differs from usual handshake techniques which try to consolidate as many steps as possible. Each packet may be transmitted as a separate connection signal.

Additionally or alternatively, the client server value may be associated with (or based on) a further TLS communication, for example a cipher signal round trip time between the server and the client device. For example, during cipher negotiation between the server and the client device, the server may be configured to reject ciphers suggested by the client. A cipher round trip time may be determined from further cipher packets sent by the client device. That is, by rejecting the cipher suggested by the client device, the client device may send further ciphers, for example "ChangeCipherSpec" instructions/packets. A round trip time may be determined from the cipher signals. The client-server value may be determined by, for example, calculating the mean round trip time from RTTs associated with the SSL packets and RTTs associated with the cipher signals.

Additionally or alternatively, the client-server value may be determined from the mean of any combination of RTTs. For example, from the mean of the TCP and SSL, the TCP and TLS, the TCP and cipher, TLS and cipher, SSL and cipher, TCP and TLS and cipher and so on. Alternatively, the client-server value may be determined as the longer or shorter of the RTT signals. Thus, it would be understood that the client-server value being determined based on the transmission time of a connection signal transmitted between the client device and the server may refer to either the client-server value comprising a value associated with the connection signal (i.e. the RTT) or that the connection signal is considered in the determination but may not be used as, for example, the additional or further connection signals may be used. That is, the connection may still be used in the determination step as it may be compared with the further connection signal/additional connection signal to determine which has the longer/shorter RTT.

While TCP and TLS measurements were used to measure RTT, of course any other suitable signal may be used. For example, higher layer measurements and/or generated recursive requests may be used to measure RTT.

The client-server value may be determined on the server-side or the client-side depending on, for example, the limitation of the service. On the server-side the RTT may be determined using raw packet analysis of the TCP handshake and further TCP/TLS communication. On the client-side JavaScript may be used to communicate with the server and calculate the RTT. Using JavaScript may allow for the analysis of more communication in a controlled fashion for more accurate results.

In a transmitting step S30, the server transmits a Packet Internet or Inter-Network Groper (PING) message, in the networked connection, addressed to the perceived indication information. That is, the server may transmit the PING message addressed to an IP address, or perceived IP address of the client device.

The PING may be transmitted by sending an internet control message protocol (ICMP) Echo Request to the specified address (i.e., the perceive indication information). When a target (either the client device or intermediary connection, discussed below) of the PING receives the message, it may transmit a PING response message. For example, if the PING is sent as an Echo Request, the PING response may be an Echo Reply.

In an example where an intermediate connection is not being used, the perceived indication information may originate from the client device. Hence, the PING message addressed to the indication information may be received by the client device and the client device may respond to the PING by transmitting the PING response.

In an example where an intermediate connection is being used, the perceived indication information may originate from the intermediary connection. Hence, the PING message addressed to the indication information may be received by the intermediary connection and the intermediary connection may respond to the PING by transmitting the PING response.

In a determining step S40 a PING tracing value based on a transmission time of the PING message and the PING response message may be determined. The PING tracing value may be referred to as tracing value in the sense that it refers to a result of sending a tracing signal in the network to determine if an intermediary connection exists.

The transmission time may be, for example, the round-trip time of sending the PING and receiving the PING response. For instance, the server may transmit the PING in the network and start a time. The time may be stopped when the server receives the PING response message. The transmission time may alternatively be half the round-trip time. It may be assumed that the processing time of the received PING in a recipient/device is negligible compared to the time taken for the PING to travel in the network. Thus, half the transmission time may be an estimate of the time taken for the PING to be transmitted from the server to the recipient (the client device or intermediary connection).

In an establishing step, s40, it may be established, for instance by the server, whether the indication information originates from an intermediary connection in the networked connection or from the client device by comparing a PING difference value based on the client-server value and probing value with a threshold value.

As an example, the client-server value may be the transmission time of the connection signal sent from the server to the client device, and may be denoted by T_sc. The PING tracing value may be the transmission time of the PING sent from the server to the recipient in the network (either the client device or an intermediate connection if being used) and may be denoted as T_sy (where y is either a client device, i.e. Tsc, or an intermediary connection, T_sv). The PING difference value may be the difference between the client-server value and the PING tracing value.

Hence, an intermediary connection may be determined if T_sc - T_sy > x, where x is a threshold, or if T_sc > x + T_sy, where (x + T_sy) is the threshold value. The value x may be set as, for example 2ms or 5ms or between 2ms and 5ms. The distance associated with a delay in 5ms may be determined using the equation,

$$d_E = T_{VC} \times \frac{c}{n_{fibre}} \quad (1)$$

Where $d_E$ is a distance error, c is the speed of light in a vacuum and $n_{fibre}$ is the refractive index of an optical fibre in the network in which transmission of signals may occur. Thus, the distance associated with a 5ms delay may be 1000km. The threshold value may be set based on, for example, the distance error. If, for example, the optional step of determining the location of the IP address is performed, the threshold value may be set based on, for example, the location of the IP addresses. For example, if the location of the IP address is in a small island, the threshold distance may be smaller than if the location of the IP address is for a large country.

While the above method steps are presented in a numbered order, it would of course be understood that the steps may be performed in any suitable order. For instance, the client-server value may be determined before and/or during reception of the indication information.

In another example, a computer program may be provided which, when run on a computer, causes the computer to carry out a method for determining an origin of indication information in a networked connection between a client device and a server comprising receiving (or causing reception of), at the server, the indication information of the client device, determining a client-server value based on a transmission time of a connection signal transmitted between the client device and the server, transmitting (or causing transmission of) a tracing signal addressed to the indication information via a particular router in the networked connection between the client device and the server, determining a tracing value based on a transmission time of the tracing signal to the particular router, establishing whether the indication information originates from an intermediate connection in the networked connection or from the client device by comparing a difference value with a threshold value, the difference value being based on the client-server value and tracing value.

In another example an information processing apparatus for determining an origin of indication information in a networked connection between a client device and a server may be provided comprising a memory and a processor connected to the memory. The processor may be configured to receive (or cause reception of), at the server, the indication information of the client device, determine a client-server value based on a transmission time of a connection signal transmitted between the client device and the server, transmit (or cause transmission of) a tracing signal addressed to the indication information via a particular router in the networked connection between the client device and the server, determine a tracing value based on a transmission time of the tracing signal to the particular router, establish whether the indication information originates from an intermediate connection in the networked connection or from the client device by comparing a difference value with a threshold value, the difference value being based on the client-server value and tracing value.

**Figure 3** shows an example implementation 300 of the method for determining an origin of indication information in a networked connection between a client device and a server. As described above, the inventors found that if the end client device is in a different location to the device in which the server is in direct communication with (for example an intermediate connection if being used), then there may be a delay difference in a connection signal and PING tracing signal. That is, this delay may be deduced as the difference between: the delay between the end client and end server, and the delay between the end server and the device with which the server is in direct communication with.

In an implementation, to determine the delay the inventors leveraged typical TCP-like behaviour, which stipulates that recipients of packets in a communication session with the sender must respond with an ACK packet that notifies the sender that the sent packet was indeed received. This mechanism enables the sender to resend the packet if it does not receive an ACK packet. Essentially, the ACK packet is sent from the end client even if said client is not the device with which the end server is in direct communication with (i.e. even if the end client is communicating via a VPN/Proxy). Thus, the RTT (round trip time) from when a packet is sent from the end server to when an ACK is received for that packet may be determined, and this value may be divided by 2 in order to obtain a measure of the delay between the end client and the end server. That is, in order to determine the client-server value previously discussed.

To obtain the delay between the end server and the intermediary connection (e.g., VPN/Proxy), should one be being used, the end server may send a Ping to the perceived indication information, in this case a public IP address, with which it is communicating. A PING reply is received from the VPN/Proxy, should it exist; and, thus, by dividing the RTT of this ping by 2, a measure of the delay between the end server and the VPN/Proxy may be obtained. If no VPN/proxy exists, the measure obtained by the TCP ACK should be approximately the same as that obtained by Ping. If a VPN exists and is being used to manipulate the perceived location of the client, a difference between these two measurements may be observed that is directly proportional to the distance between the end client and the VPN/Proxy. This example implementation is detailed in Figure 3.

As shown in Figure 3, a client 320 may form a networked connection with a server 330. The networked connection may be configured with an intermediary connection, which in this example is a VPN/Proxy 310.

The client, or client device, may be operated by an end user. The client may initiate a TCP communication (handshake) to the server. The TCP communication is an example of the connection signal sent between the server and client. In this example, the handshake is be routed through the VPN. The VPN may act as a relay. That is, the VPN may not interrupt the TCP handshake and instead forwards the TCP connection to the server. The service requested by the client device may be, for example a HTTP request.

The server responds to the TCP communication with an ACK. Along with transmitting the ACK, the server records a time of sending the ACK. The Server also initiates and transmits a PING to the public IP address received when the client requests the TCP handshake.

In this example, as the VPN is used, and the public IP address therefore belongs to the VPN rather than the client device, the VPN receives the PING from the server and transmits/sends a PING reply to the server.

The ACK (TPC ACK) is received by the client device and the client device responds by sending an ACK response to the server.

The server receives the PING response from the VPN and the ACK response from the client device. Of course, at this stage it may not be known if the client is using a VPN. The server computes the respective time delays of the connection signal, T_sc, (TCP handshake) and the PING, T_sv. The respective time delays are examples of the client-server value and the PING tracing value discussed in relation to Figure 2 above.

The server compares the respective time delays and, if T_sc - Tsv > x, the server establishes/infers that a VPN is being used.

Thus, determining the origin of the indication information/detecting an intermediary connection may be achieved by leveraging TCP-like protocol behaviour to measure communication delays between the public IP address of the client and the actual client device; if the delay exceeds a threshold, it may be inferred that an intermediate connection exists and is located further than a threshold distance from a client device.

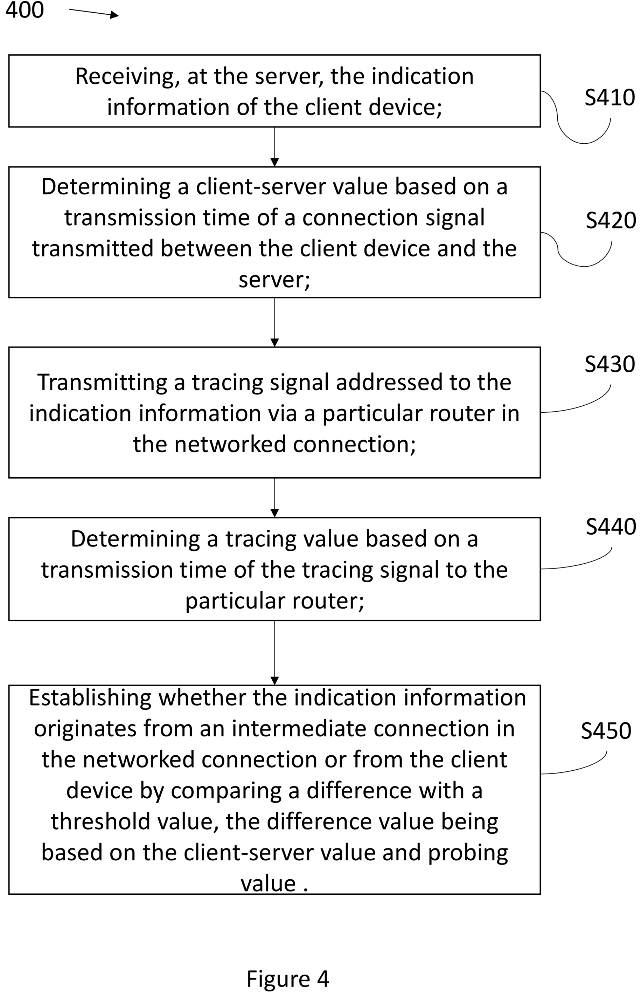

**Figure 4** shows steps of a further method 400 for determining the origin of indication information in a networked connection between a client device and a server. The inventors found that in some cases the intermediate connection does not respond to PINGs. For instance, a VPN may be purposefully configured not to respond to PINGs so as to stay hidden on a network. The inventors therefore developed another method for determining the origin of indication information in a networked connection between a client device and a server. That is, the method may detect an intermediary connection in a networked connection between a client device and a server. The method may comprise the following steps. Some steps may be the same as the steps described in relation to Figure 2 above and are therefore not repeated in detail below.

In a receiving step s410, a server may receive indication information of a client device. An example of the receiving step is described in relation to Figure 2 and is not repeated here. The indication may otherwise be referred to as location information. That is, the information may 'indicate' the location of where the information originates (e.g., the client device or intermediary device).

As previously described, in an optional obtaining (or determining) step, a geolocation associated with the perceived indication information may be obtained.

In a determining step s420, a client-server value based on a transmission time of a connection signal transmitted between the server and the client device may be determined. An example of this determining step is described in relation to Figure 2 and is not repeated here.

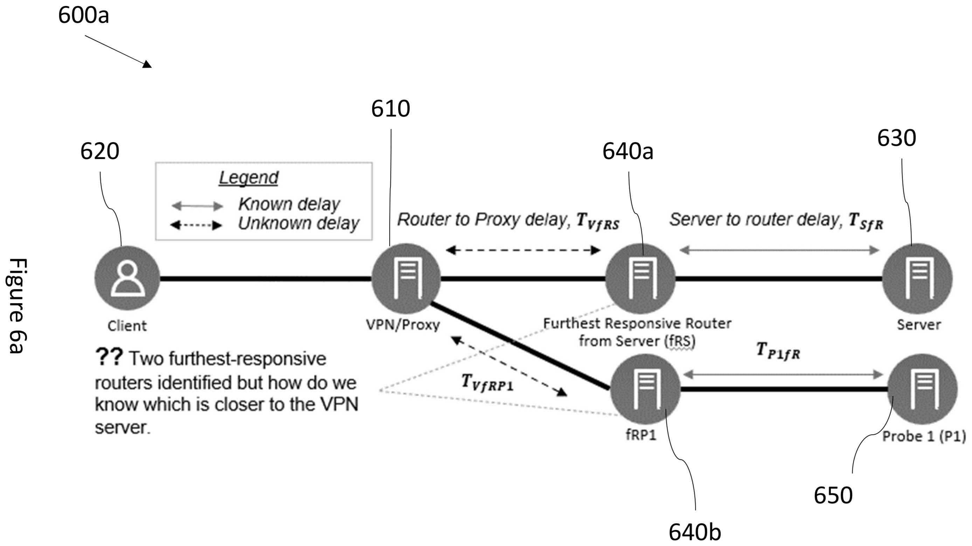

In a transmitting step s430 a tracing signal may be transmitted addressed to the indication information via a particular router in the networked connection. A networked connection may have one or more individual routers which are involved in transferring data between the client device and server. In the transmitting step, the server (or a probe, discussed below in relation to Figures 6a to 10) may transmit individual tracing signals to one or more (e.g., each) of the one or more individual routers in the networked connection. The tracing signals may be addressed to the indication information (for example the IP address) and may be intercepted by each router in the network.

The individual tracing signals may be transmitted to each of the routers as part of a traceroute. The individual tracing signals may be, for example ICMP packets/messages or user datagram protocol (UDP) packets/messages. The individual tracing signals may use the TLL field of an IP packet header used in the transmission.

Hence, the traceroute may pass through/intercept each individual router in the network path before arriving at the destination of the perceived indication information (either the client device or intermediate connection if being used). In this example, the intermediate connection (such as a VPN or proxy) may also be considered as one of the routers in the network.

In a determining step s440, a tracing value based on a transmission time of the tracing signal may be determined. Each individual router in the network path (i.e. in a path of the networked connection between the client device and server) which receives an individual tracing signal may transmit an individual tracing response. The individual tracing signal, of the individual tracing signals, with the longest transmission time may be assigned as the tracing signal. The individual router which receives the tracing signal, that is the individual router which receives the individual tracing signal with the longest transmission time, may be assigned as the particular router. In an example, the intermediate connection may also be assigned/ may be considered as the particular router. That is, the intermediate connection may be responsive to tracing signals, sent for example by a traceroute. If the intermediate connection is responsive to a tracing signal, the intermediate connection may receive the individual tracing signal with the longest transmission time and may therefore be assigned as the particular router.

In this example, the tracing signal is the individual tracing signal of the individual tracing signals with a longest transmission time. The transmission time may be understood as the time a signal is sent, e.g. from the server, to the time the signal is received e.g. by a router. That is, the time between transmission and reception of a signal.

The transmission times for each of the individual tracing signals and responses may be measured as the round-trip time for the transmission of the individual tracing signal and the reception of the individual tracing probing response. The determined tracing value may therefore be the tracing value associated with the longest transmission time (e.g., the longest round-trip time selected from the individual tracing signals). The particular router may therefore be the router which is the furthest distance from the origin of the tracing signal, the origin of the signal being, for example, the server or probe.

In an establishing step, s440, it may be established, for instance by the server, whether the indication information originates from an intermediate connection in the networked connection or from the client device by comparing a difference value with a threshold value, the difference value being based on the client-server value and tracing value. A similar example of this establishing step is described in relation to Figure 2 and is not repeated here. In this example, the tracing value may replace the PING tracing value described in relation to Figure 2.

Thus, the method developed by the inventors, which may be referred to as **D3etecta** (for **D**isplacement **D**iscrepancy **D**etection via **A**ctive means, pronounced "deetecta"), may be predicated on the assumption that if the end client is in a different location to the device with which the server is in direct communication with, then a transmission delay may be expected between the end client and the device with which the server is in direct communication with (i.e. the intermediary VPN/proxy server). Should this delay exceed a threshold, it may be inferred that the two are likely in different geographic locations. The method described herein may solve this problem by measuring this delay using robust in-band means that overcome various obstacles, such as the case where the public IP address, that is visible to the server, does not respond to Pings.

While the above method steps are presented in a numbered order, it would of course be understood that the steps may be performed in any suitable order. For instance, the client-server value may be determined before and/or during reception of the indication information.

In another example a computer program may be provided which, when run on a computer, causes the computer to carry out a method for determining origin of indication information in a networked connection between a client device and a server comprising receiving (or causing reception of), at the server, the indication information of the client device, determining a client-server value based on a transmission time of a connection signal transmitted between the client device and the server, transmitting (or causing transmission of), by the server, a Packet Internet or Inter-Network Groper (PING) message in the networked connection addressed to the indication information, transmitting (or causing transmission of) a tracing signal to a particular router in the networked connection between the client device and the server when an elapsed time for receiving PING response message is exceeded, determining a tracing value based on a transmission time of the tracing signal, establishing whether the indication information originates from an intermediate connection in the networked connection or from the client device by comparing a difference value with a threshold value, the difference value being based on the client-server value and tracing value.

In another example, an information processing apparatus for determining origin of indication information in a networked connection between a client device and a server may be provided comprising a memory and a processor connected to the memory. The processor may be configured to receive (or cause reception), at the server, the indication information of the client device, determine a client-server value based on a transmission time of a connection signal transmitted between the client device and the server, transmit (or cause transmission of), by the server, a Packet Internet or Inter-Network Groper (PING) message in the networked connection addressed to the indication information, transmit (or cause transmission of) a tracing signal to a particular router in the networked connection between the client device and the server when an elapsed time for receiving PING response message is exceeded, determine a tracing value based on a transmission time of the tracing signal, establish whether the indication information originates from an intermediate connection in the networked connection or from the client device by comparing a difference value with a threshold value, the difference value being based on the client-server value and tracing value.

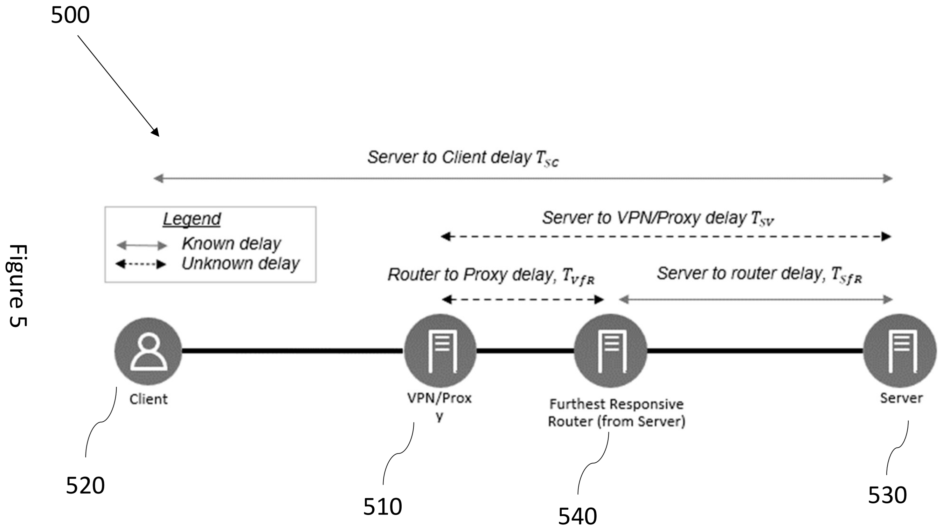

**Figure 5** shows an example implementation 500 of a further method for determining the origin of indication information in a networked connection between a client device and a server. As described above, the inventors found that in some circumstances the intermediate connection may not respond to pings (but of course the other method may be used if the intermediate connection does respond to pings). In this implementation, a traceroute from the server 530 to the public IP address that is being communicated with may be performed to obtain a measure of the delay between the server and the furthest responsive router 540 (e.g., a router, furthest from the server, that responds to the traceroute from the server, i.e., the particular router described above). This delay may be used to estimate the delay between the VPN/proxy 510 itself and the furthest responsive router - illustrated in Figure 5.

As previously described, a connection signal may be transmitted between the server and a client device 520, for example when the client device requests a service, such as an http request. The server-client value, in this instance the time delay between the client and server, denoted as $T\_sc$ in the Figure, may be determined from the round-trip time of the connection signal. Indication information associated with, or perceived to be associated with the client device, may be transmitted to the server during the connection process. The indication information may be, as before, a public IP address.

The server may additionally transmit a tracing signal to the furthest responsive router, via for example a traceroute. A tracing value may be determined based on the transmission time of the tracing signal. For example, the time for the tracing signal to be intercepted by the furthest responsive router and for the furthest responsive router to transmit a tracing signal response may be measured. A tracing value associated with the transmission time may be the server to router delay, TsfR. The server to router delay may be determined as half the round-trip time for the tracing signal and tracing signal response.

Steps for performing a traceroute may be as follows.

1. The server invokes a traceroute (or tracert) command and specifies a target host. The target host may be specified using the indication information (for example, the IP address).
2. The Traceroute sends a data packet towards/addressed to the indication information with the TTL value set to "1". The first router in the path will decrement the value by 1. This may then trigger a TTL exceeded message, which gets sent back to the server.
3. With details of the first 'hop' obtained, i.e., the first router in the networked connection, the traceroute will increase the TTL value to "2". That first router in the path will still decrement the value by 1, but as the TTL drops to "1" and not zero the packet can be transmitted further through the network for one more "hop". Once the TTL value does hit zero (in this case, at the second router in the path), another TTL exceeded message should be generated and passed back to traceroute, which in turn is returned to the router.
4. The process repeats itself, with traceroute increasing the TTL by 1 each time, until the destination of the indication information is reached (or no further response is received) or an upper limit of hops is hit. The upper limit may be set by the server.
5. When finished, traceroute may print all the routers in the path (including the intermediate connection if it responds to the traceroute), along with the amount of time it took to each router and back (i.e., the round trip time).

As shown in the Figure, the server to VPN/Proxy delay, $T\_sv$ and the furthest responsive router to VPN/proxy delay, $T\_vfR$ may not be known. For example, $T\_sv$ may be un-determinable if the VPN/proxy does not respond to PINGs, or other probing/tracing signals. To determine whether an intermediate connection is being used in the network, or in other words, whether the indication information originates from the client device, the difference in the client-server value and the tracing value may be taken and compared to a threshold value, in the same/substantially similar manner described in relation to Figures 2 to 4 above.

In effect, the particular router to VPN/proxy delay may be considered negligible compared with the server to client delay and the server to router delay. That is, the furthest responsive router may be considered the closest router to the VPN/Proxy, within a distance error of the true location of the VPN/proxy.

**Figures 6a - 6c** show a further implementation 600a, 600b, 600c of the further method for determining an origin of indication information in a networked connection between a client device and a server. The inventors found that there is the possibility that when using a traceroute from the end server 630, the furthest responsive router found may not be the responsive (to Pings) router that is closest and connected to the VPN/Proxy server, thus may not provide the most accurate estimate of the delay between the server and the VPN/Proxy. The inventors found that this may be addressed by performing traceroutes to the VPN/Proxy from multiple sources to detect multiple furthest responsive routers from which the nearest furthest responsive router to the server may be selected (as the intermediary router).

As before, Figures 6a - 6b show a VPN/Proxy 610, a client device 620, a server 630, and a furthest responsive router to the server (which may be referred to as a server-furthest response router 640a). The Figures additionally show a probe (probe 1 or 650). The furthest responsive router from the probe is denoted as fRP1 640B in the Figure (and may be referred to as probe1-furthest responsive router). While one probe is show here, the method may include more than one probe, for example two or three or four probes. Each of the one or more probes may have a corresponding furthest responsive router.

In one example (e.g. as described above), individual tracing signals may be transmitted from the server. In another example, the individual tracing signals may be transmitted by the server and the probe. The individual tracing signals may take different paths in the network and therefore intercept different routers in the network. Alternatively, the individual tracing signals may take the same path in the network and intercept the same individual routers. In this example, the server-furthest responsive router and the probe1-furthest responsive router are different routers. The furthest responsive router for the probe may be determined in a corresponding manner to the server. That is, an individual tracing signal is transmitted in the network, though for example a traceroute, and each router in the network which receives the individual tracing signals responds with an individual tracing response. The individual router with the longest transmission time for an individual tracing signal may be determined as the furthest response router for the probe.

Once the furthest responsive routers for each of the server and one or more probes is determined, a router closest to the VPN/proxy of the furthest responsive routers may be determined. The closets router to the VPN/proxy may be assigned/labelled as the particular router.

The inventors found that the furthest responsive router closest to the VPN/Proxy may have the lowest T_VfRxx delay (the transmission delay of the individual tracing signal between the probe/server and the VPN/Proxy, where xx is the traceroute source (e.g., the probe/server)).

This delay may be estimated for each router using the following equation:

$$T_{VfRxx} = T_{xxC} - T_{xxfR} - T_{VC} \quad (2)$$

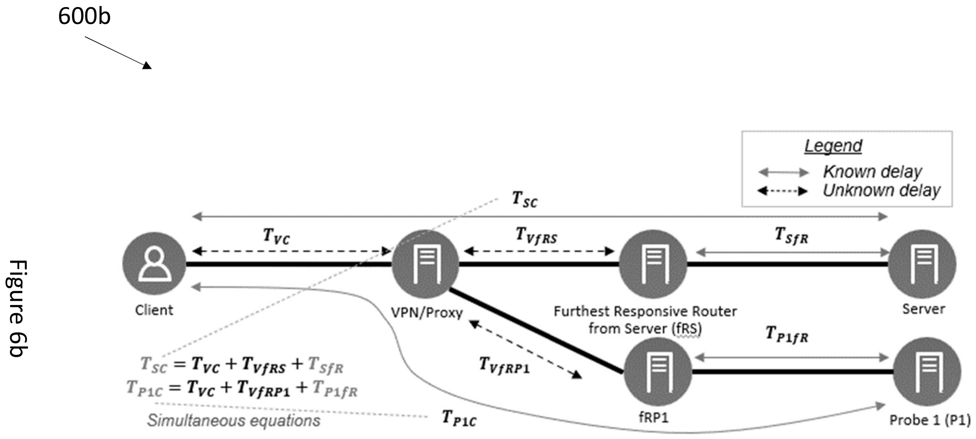

where T_VC is the delay between the VPN proxy and the client and "xx" is the traceroute source. Since T_VC is constant (or considered constant) for all traceroute sources "xx", it can be eliminated to deduce that the lowest value of T_VfRxx corresponds to the router that is closest to the VPN/Proxy. This process is illustrated in Figure 6b.

As shown in Figure 6b, simultaneous equations for determining the closest furthest response router to the VPN/Proxy are:

$$\boldsymbol{T_{SC}} = T_{VC} + T_{VfRS} + \boldsymbol{T_{SfR}} \quad (3)$$

$$\boldsymbol{T_{P1C}} = T_{VC} + T_{VfRp1} + \boldsymbol{T_{P1fR}} \quad (4)$$

Terms marked in bold in the above equation show time delays which may be determined directly from the connection signals/individual tracing signals. Before determining the closest furthest responsive router (the particular router), the value $\boldsymbol{T_{P1C}}$ may be determined.

The inventors developed the following method for determining $\boldsymbol{T_{P1C}}$, (and more generally the transmission delay between any probe and the client device) and thereby determining the closest router to the VPN/proxy.

As described in relation to the method above, an original condition for checking if there is an intermediary connection (e.g.., VPN) in the network was that "if T_SC-T_SV>x, the server infers the use of a VPN".

Generally, this equation may be written in the form: T_xxC-T_xxV>x, where "xx" is the source of the traceroute (i.e. Server or Probe 1), where the set of xx values corresponding to traceroute source that is found to produce the router closest to the VPN/Proxy is ultimately used to establish if an intermediate connection is being used.

The inventors found that this presents an additional challenge, since T_xxC from a different end server (probe) from the one the client was originally communicating with is obtained. This is a challenge because the client may have been communicating behind a VPN and its true IP address may thus be hidden.

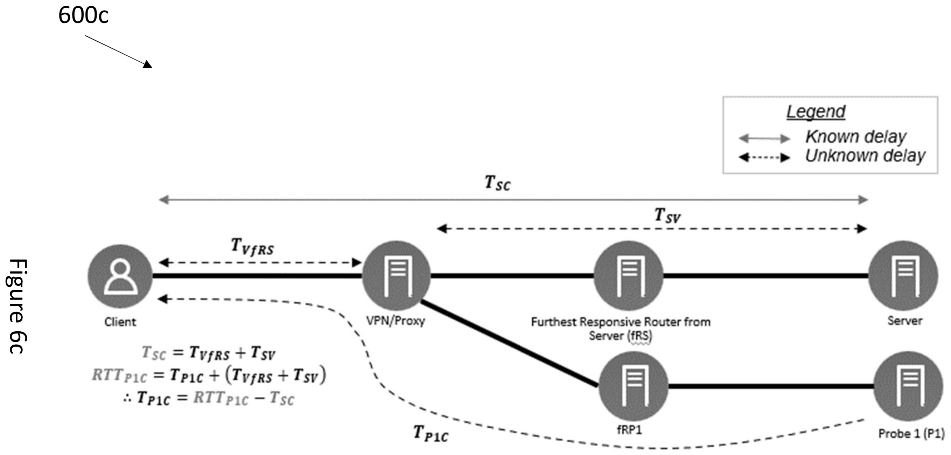

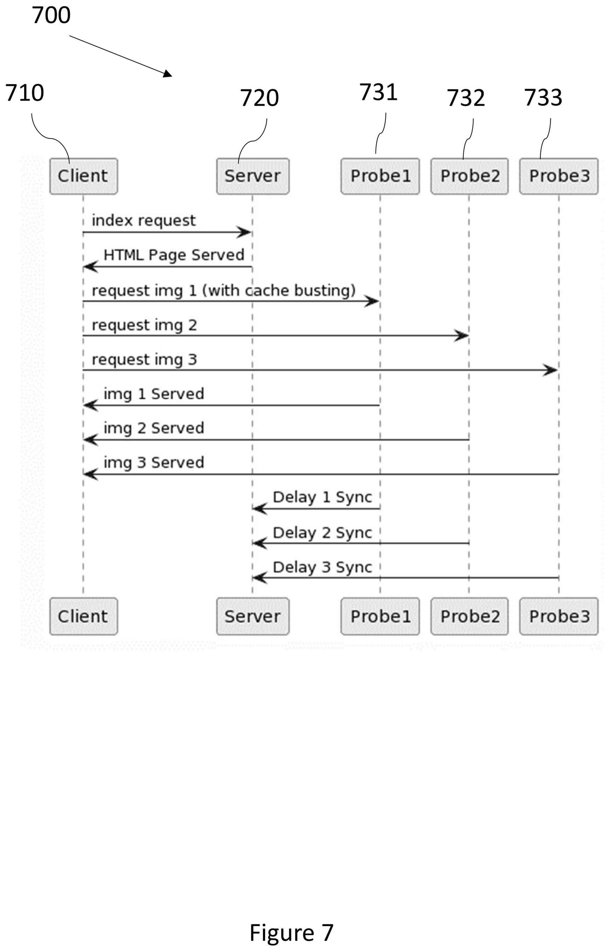

Considering Figure 6c, probe 1 may send a probe message to the client device, with the transmission time TP1C, and the client device may respond with a probe message response, examples of probe messages are provided in relation to Figure 7 below. The probe message response, however, may be sent to the server 630 with the transmission time T_CS, rather than to probe 1. That is, the probe message response may be sent only to the server. The probe may use the same indication information to transmit the initial message. That is, the server and probe may share the indication information to communicate with the client device, through for example an anycast network. However, the probe message response may be sent to the server as the network connection, belonging to the designated indication information (e.g., public IP address), is between the client device and the server, not the probe.

The inventors identified multiple methods which may be used to configure the end server and one or more probes to communicate with the client device.

Intrusive Method

Client Agent -interact with an agent on a client that could communicate to the probe (which may be referred to as a new end server). This would likely require intrusive software (SW) functionality on the client or the client agent may refuse to cooperate.

Non-Intrusive Methods

URL (or other) Redirection - can force the client to communicate to a different IP address. For websites this method can negatively impact page rankings, also the redirection process may be perceptible to the end user.

Virtual IP Addresses/Anycast -Anycast routing may be leveraged to enable legitimate communications to the client from a different end server in a completely different physical location. This may be enabled by the fact that these end servers are able to share the same IP address and thus are able to penetrate behind the VPN to the client. This method, if done tactfully can appear hintless to the end user.

IP Address Spoofing - may be used, however the inventors found that this may not be a reliable way of achieving this since spoofed packets violate Internet rules and tend to be are actively dropped by network infrastructure when detected.

The primary method selected by the inventors for obtaining the delay between the new server location [probe 1] and the end client was the Anycast networking (see for example https://render.com/blog/how-to-build-an-anycast-network).

In the Anycast method, Probe 1 may penetrate behind the VPN since it shares the same IP address as the server. The responses from the client are still routed to the server only. Thus, coordination may be required between the probes and the server to perform measurements. As discussed above, Figure 6C illustrates how the T_xxC delays may be obtained using the equation

$$\mathrm{T_{P1C} = RTT_{P1C} - T_{SC}} \quad (5)$$

to combine known timings in the context of an anycast network (where the reply by the client to a message sent from probe 1 will be delivered to the server). In the above equation RTT_P1C represents the round-trip time of a probe message being sent from probe 1 and the probe message response being received by the server, and $T_{SC}$ represents the server-client value (e..g., the transmission time of the connection signal). When sending the probe message, probe 1 may log the time of sending and when receiving the probe response message the server may log the time of reception. By taking the difference between the two times, the RRT_PC1 time may be determined.

Thus, the steps of determining the transmission time of the probe message may comprise: recording a first time stamp of a time when the probe message is transmitted; recording a second time stamp of a time when the probe message response is received; determining the difference in time between the first and second time stamps as a probe message round-trip time; and taking the difference between/of the probe message round-trip time and the client-server value as the transmission time of the probe message.

Rearranging equations 3 and 4 above, arrives at the equation:

$$\left( T_{VfRS1} + 2T_{VC} \right) + T_{VfRxx} = T_{xxCS1} - T_{xxfR} - T_{S1fR} \quad (6)$$

Where the values on the right ($T_{xxfR}$ and $T_{S1fR}$) are known and the router closest to the VPN produces the lowest Left-hand-side value as ( $T_{VfRS} + 2T_{VC}$) is assumed constant for each server/probe.

Once, the $T_{xxC}$ delays have been obtained for all of the probes, and, using that, the furthest responsive router that is closest to the VPN is determined (e.g., the particular router is assigned, an estimate for the delay between the end client device and the device with which the end server is in direct communication may be determined (where the device may be the end client device if no intermediate connection is being used, or is the, for example VPN/proxy if an intermediate connection is being used).

The delay between the client device and intermediate connection (if being used) may be determined by approximating the intermediate router as being in the same location as the VPN/proxy. Thus, $T_{VfRxx} \approx 0$ and $T_{xxV} \approx T_{xxfR}$.

Thus

$$T_{VC} \approx \mathrm{T_{xxC}} - T_{xxfR} \quad (7)$$

It may be inferred whether an intermediate connection (VPN or a Proxy server) is being used if this delay exceeds a certain threshold. That is, Tvc may be compared with a threshold value,

If $T_{VC} > x$ it may be determined that an intermediate connection is being used. Where x may be between 2ms and 5ms (inclusive). In this example, T_VC may be the difference value.

Of course, the above equations may be rearranged to establish that the perceived indication information of the client device originates from the intermediate connection, if the client-server value exceeds a threshold value, the threshold value being, for example, at least partly based on the tracing value. For example,

$$RTTp1cS - Tsc - Tp1V > x \quad (8)$$

Or $T_{sc} < RTT_{p1cS} - T_{p1V} - x$.

If is it established that an intermediate connection is being used (after the above is determined), no more communication between any of the probes and the client may be required, and communication between the client and the server may resume as before the VPN detection period.

The above methods may be leveraged by content delivery networks CDNs (e.g. website hosts) to populate and maintain a database of likely VPN/Proxy IP addresses. Using this, a provider may be able to offer hybrid VPN/proxy detection services.

The methods described herein are able to detect displacement discrepancies in scenarios where VPN/Proxies create a second separate TCP connection with the server on behalf of the client (hence originate TCP packets and send to the server) and scenarios where VPN/Proxies forward the TCP packets received from the client). The methods provide a resilient procedure of estimating the delay between the VPN/Proxy and the server and may also add in redundancies to obtain the true delay between the end server and the client in the case TLS/SSL is not being used.

Additionally, the methods described herein may add detection resilience in the case of uncooperative VPN servers, which may not respond to pings.

Further, the methods described herein may provide the following benefits:

- Resilient estimation of the delay between the VPN/Proxy and the server, in the cases where the VPN/Proxy does not originate ACK packets (but only relays them) or when it doesn't respond to Pings.
- The individual (substitute) routers found are inline, which may maximize the precision of the timing measurement and increase the chances of discovering a router (or point) very close to the actual VPN/Proxy server.
- There may be no risk of geolocation inaccuracies (which range from 50% to 75% for City granularity) causing detection errors, with this method.
- The methods may not require an excessively large number of probes but may be very well suited to a CDN network that has distributed Points of Presence (PoPs) in cities around the world, which is the case for all CDN's and thus may not require any additional infrastructure.

**Figure 7** shows an example 700 of coordination between probes 731 732, 733 and a server 720 to obtain transmission delays from probe messages and probe message responses in the network connection. The transmission delays obtained in this example are the transmission delays, $T_{xxC}$, for the transmission of a probe message between each of the probes and the client 710.

The client device may request access to a web page hosted by the client device. For instance, the client device may send an index request to the server. The server may respond with an HTML page served to the client device.

Intelligent algorithms may be used to obtain the $T_{xxC}$ delays seamlessly (i.e. without any service degradation or any noticeable latency). For example, when loading a webpage, a message (e.g. an image file or image information) intended for the client may be divided into N parts (one part for each probe including the server). Each part of the divided message may be distributed directly to the probes, which send them to the client as the probe message, and record the timings of them being sent. In this example these times are sent back to the server. The server uses these times, combined with the ACK responses (not shown), e.g., probe message responses, received from the client in order to compute the $RTT_{PxC}$ delays.

The server and probe(s) may coordinate such that sending of the parts of the image (image parts), or set of images is divided between the probe(s) and the server so that all (image/s) constituents are sent and that no constituent is sent by more than one device (probe or server).

In this example, the client device sends image requests to each of the probes, e.g. request img 1, request img 2 and request img 3. Each of the probes serve the requested image directly to the client device (that is they do not pass through the server to send the image information to the client). In this instance, the probe message may be the message sent to server the images, e.g., img 1 served, img 2 served, img 3 served. The probes may additionally send the delay sync (i.e., a time stamp of the time of transmission the probe message) to the server.

For the cases where the VPN server sends the ACK messages (for example, rather than the client), SSL protocol messages may be used to ensure a response from the client. Specifically, the inventors found that the only SSL Packets that are sure to reach the client are the SSL Handshake Packets. Measuring the delay from the maximum number of probes available may improve the chance of locating a further responsive node closest to the intermediate connection. Further, extending the length of the Handshake as much as possible may improve the accuracy of the transmission time measurement between the server/probe and client device. The server can be configured to request client authentication, which adds to increase the number of handshake SSL packets exchanged. Furthermore, additional TSL extensions enabled by the client can be utilized to extend the negotiation. For example, cipher negotiation may be used as discussed above.

HTML tags that trigger additional requests may be utilized to immediately communicate with the server/probes to obtain multiple delay measurements. HTML tags may be used, for example, when no SSL is used or for further communication. These requests can include cache busting techniques to ensure communication with the server/probes. To ensure that there is no further delay (based on domain lookup time) an IP directly in the url may be used or by ensuring that the same domain name is used in all requests. To use the same domain may require using the anycast servers solution with an additional layer of tags to ensure measurement of a full RTT (for example - an iframe that loads an additional image tag).

Another method to ensure that the communication originates from the client is to use JavaScript code. However, using JavaScript may notify the VPN/proxy of a detection attempt. JavaScript may therefore be avoided in a use case for obfuscating the detection of the VPN services, which themselves are actively trying to avoid detection.

Another possible implementation for the probe system is the use of multiple "Reverse Proxies" as probes that share the same anycast IP. These reverse proxies will route the communication to only one main web server which will then choose which proxy to route the answer through. This way we can get measurements from different probes in a seamless way. That is, in a reverse proxy architecture, proxies (which may be servers themselves) may sit in front of the main server and inspect requests before forwarding them on to the main server.

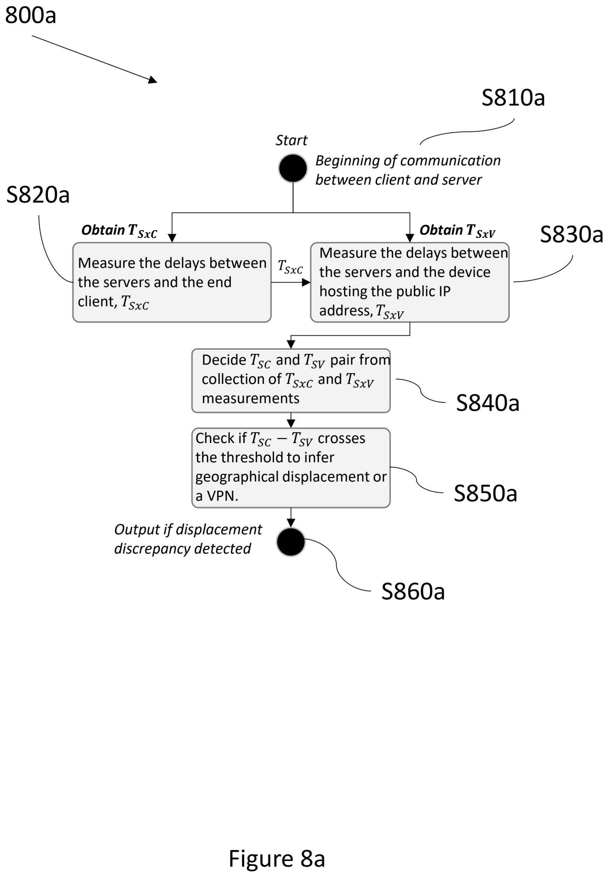

**Figures 8a-8c** show flow charts 800a, 800b, 800c of an example implementation of the methods described herein. A numerical example is provided below in relation to the description of the Figures.

A starting step s810a, may be the beginning of communication between the client and server. For example, a web server may receive an https communication request from a device of source IP address 233.252.0.0 (that is an indication information) and would like to determine whether the location of the visible IP address matches that of the actual end-client device that originated the communication.

An Obtain **T_SxC** step s820a, may comprise obtaining measures of $T_{SxC}$ between the client and multiple probe (server-side) sources. The server may initially obtain the client-server value from a TCP handshake. The TCP handshake may occur first and the server may record the delay between its sending of a TCP ACK to its receiving of a TCP ACK from the client:

$$RTT_{S1X-TCP} = 100\,ms, \qquad \therefore\ T_{S1X-TCP} = \frac{100}{2} = 50\,ms$$

Hence in this example the client-server value is $T_{S1X\text{-}TCP}$ which is 50ms.

Upon receipt of the initial communication from the client, the server may PING the entailed IP address. If a response to the ping is recorded it may be determined that a VPN is being used. However, in this example, no reply (no PING response message) is received so the server initiates traceroutes to the IP address from multiple geographical locations including its own.

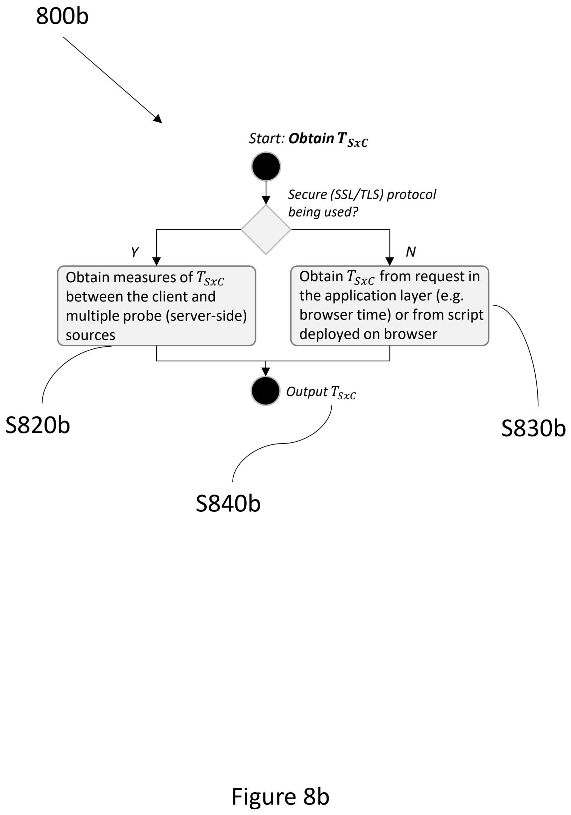

Referring back to the obtain **T_SxC** step s820a, if, for example the PING is unsuccessful, the server may initiate one or more probes. In a case where Secure (SSL/TLS) protocol is being used, Y in Figure 8b, a step of "Obtain measures of $T_{SxC}$ between the client and multiple probe (server-side) sources" 820b may performed for the server and each probe. In a case where Secure (SSL/TLS) protocol is not being used, N in figure 8b, a step of "Obtain $T_{SxC}$ from request in the application layer (e.g. browser time) or from script deployed on browser" may be performed.

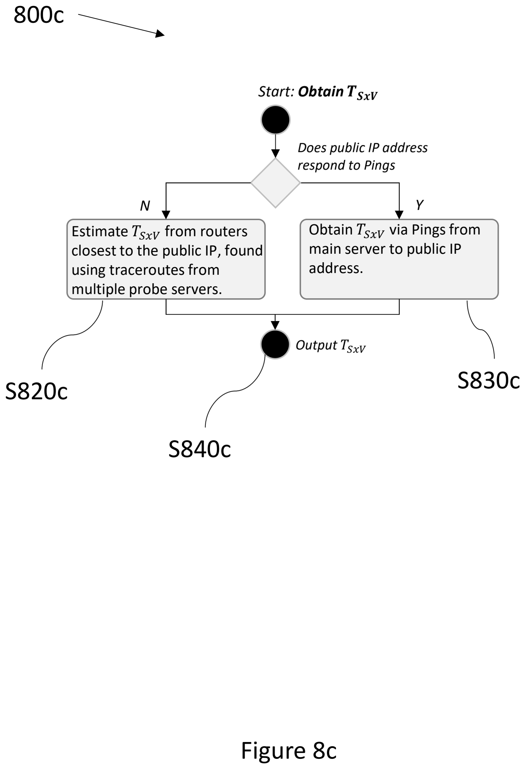

An Obtain $T_{SxV}$ step 830a, may comprise obtaining measures of the delays between the server/probes and the device hosting the public IP address, $T_{SxV}$. Referring to Figure 8c, in a first instance, as described above, the method may determine if the public IP address responds to PINGs. If Yes, the step "Obtain $T_{SxV}$ via PINGs from the main server to public IP address" 830c may be performed. In the Y case, the time delays associated with the probes may not be required. It may be concluded from the PING response by the VPN/proxy that the VPN/proxy exists in the network.

Still referring to Figure 8c, in the "No" case, the step "Estimate $T_{SxV}$ from routers closest to the public IP, found using traceroutes from multiple probe servers." 820c may be performed. In this example where the VPN/proxy was unresponsive to PINGs, the server and two additional probes are deployed (the probes are also referred to servers in this example i.e. s2 and s3), with the IP addresses of the corresponding furthest responsive routers being 233.252.1.1, 233.252.1.2, and 233.252.1.1, respectively. Dividing the RTTs by 2 produces the $T_{SxV}$, transmission delays:

$$T_{S1V} = 25\,ms$$

$$T_{S2V} = 40\,ms$$

$$T_{S3V} = 50\,ms$$

Following the TCP handshake, the server may take a measurement of the RTT to the end client using the TLS handshake:

$$RTT_{S1X-T} = 104\,ms, \qquad \therefore\ T_{S1X-TLS} = \frac{104}{2} = 52\,ms$$

Since the RTT measured from the TLS and TCP protocols are similar, it may be inferred that either the public address exists in the same location as the end-client device or the VPN is TCP-passive (doesn't originate TCP packets to the server but only forwards them from the client), in which case the public IP address may still exist in a different location to the end-client device. Which is true may be verified by comparing the TLS and TCP RTTs with the RTTs from the PING measurement to the VPN proxy/ the traceroute measurement to the furthest responsive router (the particular router).

For each traceroute that was previously mentioned, the lowest RTT delay of the 'PINGs' sent to the furthest responding router (furthest from the sending probe) may be captured. This results in a set of $RTT_{SxfR}$ delays, which, after addition of a small 4ms adjustment, are assumed to be that between the VPN $RTT_{SxV}$.

These delays are:

$$RTT_{S1V} = 50\,ms, \qquad \therefore\ T_{S1V} \approx T_{S1fR} = \frac{50}{2} = 25\,ms$$

$$RTT_{S2V} = 80\,ms, \ \therefore\ T_{S2V} \approx T_{S2fR} = \frac{80}{2} = 40\,ms$$

$$RTT_{S3V} = 100\,ms, \qquad \therefore\ T_{S3V} \approx T_{S3fR} = \frac{100}{2} = 50\,ms$$

The 4ms adjustment mentioned above may account for that fact that the furthest responding router may not be positioned in exactly the same location as the VPN. That is, the furthest responding router may be one hop less to the server/probe than the VPN, so the inventors added a 4ms adjustment to the server-FurthestResponsiveRouter delay in the view of providing a more accurate estimate of the server-VPN/Proxy delay. Of course, other values for the adjustment may be used. For instance, the adjustment may be more than 1ms or between 0ms and 4ms.

In a deciding step s840a, the $T\_SC$ and $T\_SV$ pair may be decided/determined from the collection of $T\_SxC$ and $T\_SxV$ measurements. Determining which furthest responsive router is closest to the VPN, as assigning that router as the particular router, allows for determining which of $T_{SxV}$ values to use the $T_{SxV}$ measured from the furthest responsive router (FRR) that is closest to the VPN is chosen (should multiple $T_{SxV}$ values exist for the same FRR, the lowest value to reduce noise may be selected). The furthest responsive router which is closest to the VPN (which is referred to as the particular router) may be determined by computing the below equation for all servers:

$$\left( T_{VfRS1} + 2T_{VC} \right) + T_{VfRxx} = T_{xxCS1} - T_{xxfR} - T_{S1fR}$$

Where the values on the right ($T_{xxfR}$ and $T_{S1fR}$) are known and the individual router closest to the VPN produces the lowest Left-hand-side value.

$T_{xxCS1}$ for server 1 may be already know (from the TCP/ TLS/SSL RTT delay) and may be determined for the remaining servers as follows. Since the client is requesting a webpage, html communication tags embedded in the delivered page may be leveraged (to trigger the end-client to request/download additional content).

Part of the webpage may be delivered by server 2 but these special tags may be sent from servers 2 and servers 3, under server 1's instruction. The time at which these tags are sent to the client may be recorded by servers 2 and 3, who notify server 1. When the client receives these tags, it may request the additional information from server 1 and server 1 may record the time each additional request is received. Using these time stamps, the delay from the server 2 to the client to server 1 may be computed $T_{S2CS1}$ and similarly the delay from server 3 to the client and then to server 1 may be computed $T_{S3CS1}$.

| Server | Time Tag Sent / HH:MM:SS:sss | Time Request Received / HH:MM:SS:sss | Delay / ms |
|--------|------------------------------|--------------------------------------|------------|
| 2 | 14:01:02:022 | 14:01:02:199 | 114 |
| 3 | 14:01:02:020 | 14:01:02:149 | 129 |

Thus, placing these values into the equation for each server:

$$K + T_{VfRS1} = T_{S1CS1} - T_{S1fR} - T_{S1fR} = 104 - 25 - 25 = 54\ ms$$

$$K + T_{Vf} \quad = T_{S2CS1} - T_{S2fR} - T_{S1fR} = 114 - 40 - 25 = 49\ ms$$

$$K + T_{VfRS3} = T_{S3CS1} - T_{S3fR} - T_{S1fR} = 129 - 50 - 25 = 54\ ms$$

Where $K = ( T_{VfRS} + T_{VC})$.

In the above equations S1 and S3 produce the same value, 54ms, which is indicates that they are connected to the same furthest response router (FRR). However, the equation for S2 produces the lowest value, thus it may be concluded that the FRR communicating with server 2 is closest to the VPN Proxy and is therefore labelled as the intermediary router.

By rearranging the above equations for S1 and S2, the transmission time for sending the message from server 2 to the client device may be determined as follows:

$$T_{S2C} = T_{S2fR} + \frac{\left( \left(K + T_{VfRS2}\right) - \left(\left(K + T_{VfRS1}\right) - \left(K + T_{VfRS2}\right)\right) \right)}{2}$$

$$T_{S2C} = 40 + \frac{\left( (49) + \left( (54) - (49) \right) \right)}{2} = 40 + \frac{49 - 5}{2} = 40 + 22 = 62\ ms$$

Alternatively, the transmission time may be calculated as the RTT for the transmission sent from the server 2 and reception of the server 1, i.e. 114ms minus the transmission time between the server 1 and client device. This may be taken as the TLS transmission time, e.g., $T_{S1X-T} = 52ms$. Thus, arriving at the same value, $T_{S2C} = 62ms$ as above. Of course, the TCP transmission time, or for example an average of the TCP and TLS transmission times may be used instead. This example may be applied if the furthest responsive router is along the network path of the server. That is, for the TLS RTT to be used, a specific furthest responsive router may be used, not any furthest responsive router (thus the equation may lose its genericity - i.e. for "xx").

Thus, the measurements from server 2 may be taken to measure the time displacement between the public IP address and the client:

$$T_{VC} = T_{S2C} - T_{S2V}$$

$$\therefore T_{VC} = 62 - 40 = 22 \; ms$$

A distance error for location of the public IP address to the location of the end client may be obtained as follows:

$$d_E = T_{VC} \times \frac{c}{n_{fibre}}$$

$$d_E = 0.022 \times \frac{3 \times 10^8}{1.5} = 4{,}400 \; km$$

Where $n_{fibre}$ is the refractive index of optical fibre, which for, for example glass, may be approximately 1.5. Since the delay exceeds a certain threshold x (x = 5 ms in this example), the use of a VPN/Proxy in the networked connection may be inferred.

The methods described herein may detect whether the device to which a server is directly communication with is not the same device originating the responses to the server; and thus may be used to infer if the server is in indirect communications with the client, through such means as: a VPN, a Proxy server, or the TOR network.

The methods are complementary to Internet geolocation technology (IP geolocation technology), because they may enable the detection of a client that is attempting to forge its geographic location, which mitigates false negatives for geolocation applications (such as a multifactor authentication GeoLock use-case - where geolocation is the additional factor) and thus increases the trustworthiness of all robust localization applications.

Further, the methods may have applications for the detection of the use of VPN's which would help content providers comply with licensing terms and international laws. A CDN with this technology may offer new services to its customers that mitigate the threat of click-fraud from Bots which leverage VPN/Proxies to conceal their activity. The methods described herein use aspects that are difficult to forge, (i.e. timings, where it is difficult for a device to be able to reduce its communication transit time), therefore providing an accurate method for detecting the use of an intermediate connection.

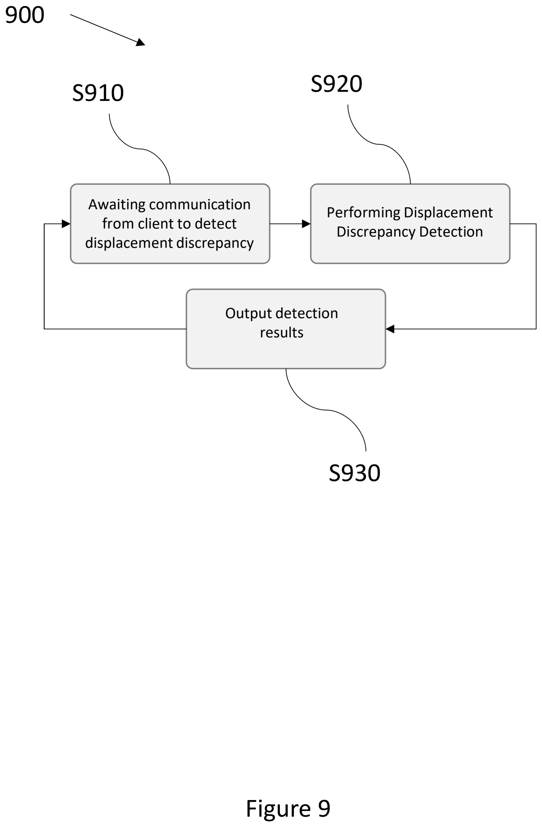

**Figure 9** shows another flow chart 900 for implementing the methods described herein.

In an awaiting step s910, the server may await a communication from the client to detect a displacement discrepancy (i.e. to detect if a VPN is being used which is in a different location to the client device).

In a performing step s920, the method(s) described herein may be performed. That is, performing displacement discrepancy detection. The method may use timing measurements to detect a (distance/time) displacement between the device hosting the public IP address (that a server is communicating with) and the end client device (that a server is communicating with), which can be used to deduce a geolocation discrepancy between the two and, thus, infer if a VPN/proxy server is being used by the end client.

In an example, if the VPN/Proxy doesn't send TCP ACK messages to the server that the client is communicating with, then Pings may be used to estimate the delay from the VPN/Proxy to the server. For instance, the server may send a PING addressed to the perceived indication information (e.g., public IP address) of the client device. If a VPN/proxy is being used and responds to the PING the server may determine that the VPN/proxy is being used. If the VPN/Proxy doesn't respond to pings, then traceroutes from an Anycast network of probes may be used to estimate the delay from the router nearest the VPN/Proxy that does respond to PINGs. If a secure TLS/SSL connection is not being used, and TCP ACKs are being sent from the VPN/Proxy to the server (not from the end client), then application layer methods may be used to estimate this delay.

Using the responses from the intermediate routers the server may determine if a VPN/proxy is being used, using the methods described herein.

In an outputting step s930, the server may output the detection results. That is, the server may output whether it has established whether the indication information originates from an intermediate connection in the networked connection or from the client. That is, the method may establish whether an intermediary connection exists in the network. Additionally or alternatively, once it has been established that an intermediary connection exists, the client device may have its access to, for example, a website or service revoked. That is, if the connection between the server and client is through a https protocol for connecting to a website, if an intermediary connection is established then the client's access to the website may blocked/revoked.

Furthermore, by establishing whether an intermediary connection is being used, the method may used be used for the following application:

- Enabling banks to better prevent phishing attacks, money laundering and other security breaches.

- Enabling law enforcement to better monitor online trafficking or trading with banned nations.

- Enabling content providers to adhere with licensing and international laws, and

- Enabling social media companies to identify threats and provide tailored services

For example, content providers may require such technology (the methods describe herein) to ensure they are complying with the licensing terms, which may restrict the distribution of content to certain areas and are not being deceived by users behind VPNs. Furthermore, multifactor authentication that leverages geolocation as a factor should not be deceived by VPNs, particularly for sensitive applications like banking. Thus, if it is established that a VPN is being used, a content provider may revoke/block a client device's access to content and/or a multifactor authentication may block the client device from authenticating/logging in.

Therefore, considering the importance of these applications the ability to detect when a client is attempting to distort its true location, may be crucial to the integrity of these systems and applications.

Active IP geolocation may be included in Trusted Web3, Smart Data Governance and privacy-aware Identity projects of the Data & Security Lab. The methods described herein may be leveraged to provide a "D3tecta service" that informs servers of whether clients are using a VPN/Proxy to communicate with the server. Such information (of IP addresses that are distant from the end client) could be collected across customers of the service in order to offer another service of passive VPN/Proxy detection, where the database of this service may be actively maintained by, for example, the D3tecta service managed by customers. That is, once it is established that an intermediate connection is being used, the methods described herein may log/store the perceived indication information (IP address). If the IP address is used again, it may be recognised as being from an intermediary connection and the client device may be blocked from accessing a service from the server.

As another example, the methods described herein may be used by content delivery networks (CDNs) in order to prevent click fraud, which is an example misuse of VPN's (https://fingerprint.com/blog/vpn-detection-how-it-works/). That is, if a VPN is detected it may be blocked from accessing the service, thereby preventing click fraud.

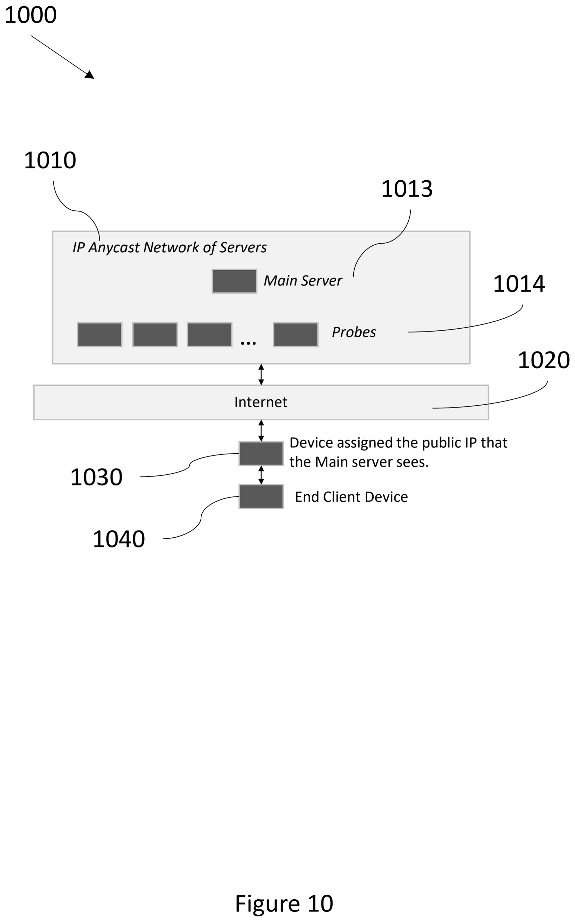

**Figure** 10 shows an architecture 1000 for performing the methods described herein. As described above, an IP Anycast network of server 1010 may be used to communicate with an end client device 1040. The anycast network may comprise a main server 1013 and one or more probes 1014. The main server may communicate with the end client device through the internet 1020. For example, the main server and client device may communicate through an HTTPS protocol.

The main client device may route its data/traffic through an intermediate connection, marked as "device assigned the public IP that the main server sees" 1030 in the figure.

The main server may receive the public IP address and share it with the probes. The probes may therefore communicate with the client device using the same IP address as the main server.

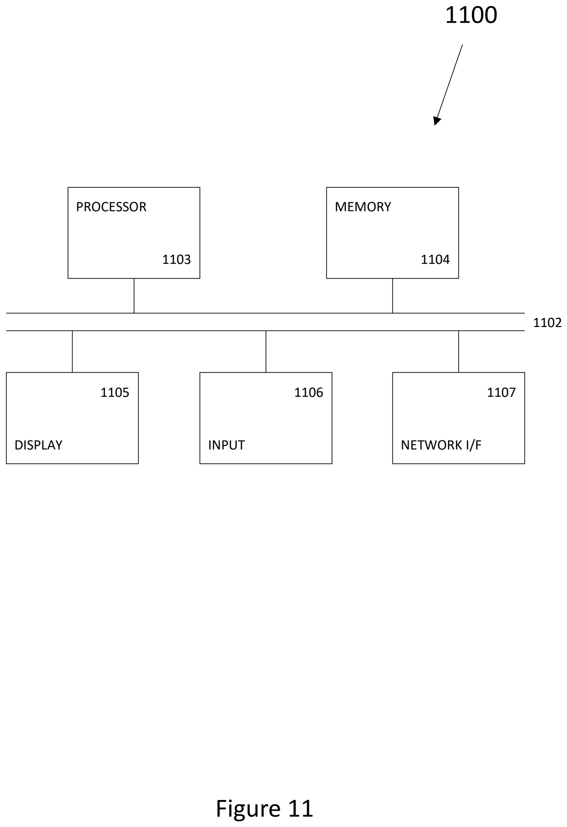

**Figure 11** is a block diagram of an information processing apparatus 1100 or a computing device 1100 or server 1100, such as a (data storage) server, which embodies the present invention, and which may be used to implement some or all of the operations of a method embodying the present invention, and perform some or all of the tasks of apparatus of an embodiment. The computing device 1100 may be used to implement any of the method steps described above, e.g. any of steps S10-S50 and/or S410-S450 and/or S810a-S860a, for example. The apparatus described in relation to Figure 11 may be implanted as the server and/or probe and/or client device described herein and, for example, in relation to the architecture in Figure 10.

The computing device 1100 comprises a processor 1103 and memory 1104. Optionally, the computing device also includes a network interface 1107 for communication with other such computing devices, for example with other computing devices of invention embodiments. Optionally, the computing device also includes one or more input mechanisms such as keyboard and mouse 1106, and a display unit such as one or more monitors 1105. These elements may facilitate user interaction. The components are connectable to one another via a bus 1102.

The memory 1104 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S10-S50. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 1103 is configured to control the computing device and execute processing operations, for example executing computer program code stored in the memory 1104 to implement any of the method steps described herein. The memory 1104 stores data being read and written by the processor 1103 and may store at least one IP address-geolocation database, probe database (i.e. a database of available anycast probes), and/or equation (e.g., equations 1, 2 and/or 3, etc), and/or any block described above, and/or programs for executing any of the method steps described above. These entities may be in the form of code blocks which are called when required and executed in a processor.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 1103 may be considered to comprise any of the blocks, or units, or modules, described above. Any operations described as being implemented by a block may be implemented as a method by a computer and e.g. by the processor 1103.

The display unit 1105 may display a representation of data stored and/or generated by the computing device, such as determination of whether a connection between a client device and a server is routed through an intermediary connection. For instance, the computing device may be a client device. The client device may be requesting access to a website/web page by communicating with another computing device (e.g. the server). The output may be shown as GUI windows and/or interactive representations enabling a server-side user to interact with the apparatus 1100 by e.g. selection interaction, input text boxes, and/or any other output described above, and may also display a cursor and dialog boxes and screens enabling interaction between a user and the programs and data stored on the computing device. The input mechanisms 1106 may enable a user to input data and instructions to the computing device. For example, the display unit may display a GUI including a User panel, or input space, for the user to interact. For instance, on the server side, a user may input a query whether a connection is routed through an intermediary device. The user may interact with the GUI and display to generate and view a determined answer. Of course, the method may be performed automatically without interaction with a user.

The network interface (network I/F) 1107 may be connected to a network, such as the Internet, and is connectable to other such computing devices and/or servers via the network. The network I/F 1107 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus/server 1100 such as that illustrated in Figure 11. Such a computing device need not have every component illustrated in Figure 11 and may be composed of a subset of those components. For example, the apparatus 1100 may comprise the processor 1103 and the memory 1104 connected to the processor 1103. Or the apparatus 1100 may comprise the processor 1103, the memory 1104 connected to the processor 1103, and the display 1105. For example, the functions and/or architecture described in relation to Figures 8a-8c and 9, may be stored in the memory and/or the method described in relation to Figure 2 and/or Figure 4 may be stored in the memory. The processor may be configured to perform the method stored in the memory using, for example, the functions and/or architecture stored in the memory.

A method embodying the present invention may be carried out by a single computing device/server in communication with one or more (data storage) servers via a network. The computing device may be a data storage itself storing at least a portion of the data. The functions and/or architecture and/or method may be stored on the one or more data storage servers and the processor in the computing device may be configured to carry out the method steps. As an example, step S10 in Figure 2 may be performed by a (web-)server receiving indication information from a client device. The server may forward/transit the indication information to the computing device/apparatus/server (i.e., a detection server) which may perform the remaining method steps S20-S50. Alternatively, the method steps S10-S50 may be performed by the (web-)server.

A method embodying the present invention may be carried out by a plurality of computing devices operating in cooperation with one another. One or more of the plurality of computing devices may be a data storage server storing at least a portion of the data. For example, IP address-geolocation database and/or probe database may be stored on a separate server from other blocks, units or modules.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

**Claims**

1.  A computer implemented method for determining an origin of indication information in a networked connection between a client device and a server, comprising:

    receiving, at the server, the indication information of the client device;
    determining a client-server value based on a transmission time of a connection signal transmitted between the client device and the server;
    transmitting a tracing signal addressed to the indication information via a particular router in the networked connection between the client device and the server;
    determining a tracing value based on a transmission time of the tracing signal to the particular router;
    establishing whether the indication information originates from an intermediate connection in the networked connection or from the client device by comparing a difference value with a threshold value, the difference value being based on the client-server value and tracing value.

2.  The method according to claim 1, wherein the tracing value is determined based on a round-trip time of a combination of the tracing signal and a tracing signal response, the tracing signal response being sent from the particular router; and optionally wherein the tracing signal and tracing signal response are comprised in a traceroute transmission, preferably wherein the tracing signal is a user datagram protocol, UDP, packet or Internet Control Message Protocol, ICMP, packet.

3.  The method according to any of preceding claim, wherein the particular router is the intermediate connection.

4.  The method according to any of preceding claim, wherein:

    the networked connection comprises more than one individual router;
    individual tracing signals are transmitted to more than one individual router in the networked connection;
    each individual router which receives an individual tracing signal transmits an individual tracing response, and an individual tracing signal, of the individual tracing signals, with a longest transmission time is assigned as the tracing signal.

5.  The method according to claim 4, wherein the individual tracing signals are transmitted by the server.

**6.** The method according to claim 5, wherein the individual tracing signals are transmitted by the server and by a probe to the same or different individual routers in the networked connection; and preferably wherein the server and probe share the indication information to communicate with the client device, preferably wherein the server and probe form an anycast network.

**7.** The method according to claim 6, wherein the tracing signal is transmitted by the probe, a client-probe value is determined based on a transmission time of a probe message sent from the probe to the client device, and the difference value is further based on the client-probe value.

**8.** The method according to claim 7, wherein the server receives a probe message response for the probe message;

and optionally wherein a difference between a round-trip time for the probe message and probe message response, and the client-server value is taken as the transmission time of the probe message
and optionally wherein the round-trip time for the probe message and probe message response is determined by:

recording a first time stamp of a time when the probe message is transmitted;
recording a second time stamp of a time when the probe message response is received; and
determining the difference in time between the first and second time stamps as the probe message round-trip time.

**9.** The method according to any of claims 7 to 8, wherein

the client-server value, the client-probe value and the tracing value are time values, preferably seconds;
the difference value is calculated as a difference between the client-probe value and the tracing value; and
preferably wherein
the threshold value is between 2ms and 5ms.

**10.** The method according to any preceding claim, wherein the indication information is an internet protocol (IP) address, preferably a public IP address and/or wherein the client-server value comprises a client-server round-trip time of the connection signal and/or wherein the connection signal transmitted between the client device and the server is at least one of a transmission control protocol, TCP, handshake signal, a secure sockets layer, SSL, handshake signal and a transport layer security, TLS, handshake signal.

**11.** The method according to any preceding claim, wherein if it is established that the indication information originates from the intermediate connection, the server limits resources available to the client device, the client device's network permission is revoked and/or the server triggers multifactor authentication for the client device.

**12.** The method according to any preceding claim wherein the intermediate connection is a virtual private network connection, a tor connection, a proxied connection or a tunneling connection.

**13.** A computer program which, when run on a computer, causes the computer to carry out a method for determining an origin of indication information in a networked connection between a client device and a server comprising:

receiving, at the server, the indication information of the client device;
determining a client-server value based on a transmission time of a connection signal transmitted between the client device and the server;
transmitting a tracing signal addressed to the indication information via a particular router in the networked connection between the client device and the server;
determining a tracing value based on a transmission time of the tracing signal to the particular router;
establishing whether the indication information originates from an intermediate connection in the networked connection or from the client device by comparing a difference value with a threshold value, the difference value being based on the client-server value and tracing value.

**14.** An information processing apparatus for determining an origin of indication information in a networked connection between a client device and a server comprising a memory and a processor connected to the memory, wherein the processor is configured to:

receive, at the server, the indication information of the client device;

determine a client-server value based on a transmission time of a connection signal transmitted between the client device and the server;

transmit a tracing signal addressed to the indication information via a particular router in the networked connection between the client device and the server;

determine a tracing value based on a transmission time of the tracing signal to the particular router;

establish whether the indication information originates from an intermediate connection in the networked connection or from the client device by comparing a difference value with a threshold value, the difference value being based on the client-server value and tracing value.

15. A computer implemented method for determining origin of indication information in a networked connection between a client device and a server, comprising:

receiving, at the server, the indication information of the client device;

determining a client-server value based on a transmission time of a connection signal transmitted between the client device and the server;

transmitting, by the server, a Packet Internet or Inter-Network Groper (PING) message in the networked connection addressed to the indication information;

transmitting a tracing signal to a particular router in the networked connection between the client device and the server when an elapsed time for receiving PING response message is exceeded;

determining a tracing value based on a transmission time of the tracing signal;

establishing whether the indication information originates from an intermediate connection in the networked connection or from the client device by comparing a difference value with a threshold value, the difference value being based on the client-server value and tracing value.

Figure 1a

Figure 1b

200

| Receiving, at the server, the indication information of the client device | S10 |

| Determining a client-server value based on a transmission time of a connection signal transmitted between the client device and the server | S20 |

| Transmitting, by the server, a Packet Internet or Inter-Network Groper (PING) message in the networked connection addressed to the perceived indication information; | S30 |

| Determining a PING tracing value based on a transmission time of the PING message and a PING response message; | S40 |

| Establishing whether the indication information originates from an intermediate connection in the networked connection or from the client device by comparing a PING difference value based on the client-server value and PING tracing value with a threshold value. | S50 |

Figure 2

**300**

**1.** Client initiates TCP communication (Handshake) to server over VPN to access service – *e.g.* HTTP Request

**2. a)** Server responds with an ACK, but also records time of sending the ACK. **b)** Server initiates Ping to Proxy IP Address (or the nearest responsive router)

*Delay between client and server $T_{SC}$*

**5.** Server receives Ping response from the Proxy server and the TCP ACK from the client and computes the respective delays $T_{SC}$ and $T_{SV}$. If $T_{SC} - T_{SV} > x$, the server infers the use of a VPN

Client

VPN/Proxy

*Delay between Proxy and server $T_{SV}$*

Server

**4.** ACK is received from server and ACK response sent

**3.** Ping is received and Ping Reply Sent to Server

**6.** The server repeats the measurements for corroboration.

**320**

**310**

**330**

Figure 3

EP 4 787 775 A1

400 →

| |
|---|
| Receiving, at the server, the indication information of the client device; |

S410

| |
|---|
| Determining a client-server value based on a transmission time of a connection signal transmitted between the client device and the server; |

S420

| |
|---|
| Transmitting a tracing signal addressed to the indication information via a particular router in the networked connection; |

S430

| |
|---|
| Determining a tracing value based on a transmission time of the tracing signal to the particular router; |

S440

| |
|---|
| Establishing whether the indication information originates from an intermediate connection in the networked connection or from the client device by comparing a difference with a threshold value, the difference value being based on the client-server value and probing value . |

S450

Figure 4

Figure 5

Figure 6a

Figure 6b

Figure 6c

Figure 7

800a

S810a

*Start*

*Beginning of communication between client and server*

S820a

S830a

***Obtain*** $T_{SxC}$

Measure the delays between the servers and the end client, $T_{SxC}$

$T_{SxC}$

***Obtain*** $T_{SxV}$

Measure the delays between the servers and the device hosting the public IP address, $T_{SxV}$

Decide $T_{SC}$ and $T_{SV}$ pair from collection of $T_{SxC}$ and $T_{SxV}$ measurements

S840a

Check if $T_{SC} - T_{SV}$ crosses the threshold to infer geographical displacement or a VPN.

S850a

*Output if displacement discrepancy detected*

S860a

Figure 8a

800b

Start: **Obtain $T_{SxC}$**

Secure (SSL/TLS) protocol
being used?

Y

N

Obtain measures of $T_{SxC}$
between the client and
multiple probe (server-side)
sources

Obtain $T_{SxC}$ from request in
the application layer (e.g.
browser time) or from script
deployed on browser

S820b

Output $T_{SxC}$

S830b

S840b

Figure 8b

800c

Start: **Obtain $T_{SxV}$**

Does public IP address respond to Pings

N

Y

Estimate $T_{SxV}$ from routers closest to the public IP, found using traceroutes from multiple probe servers.

Obtain $T_{SxV}$ via Pings from main server to public IP address.

Output $T_{SxV}$

S820c

S830c

S840c

Figure 8c

900

S910

S920

Awaiting communication from client to detect displacement discrepancy

Performing Displacement Discrepancy Detection

Output detection results

S930

Figure 9

**1000**

**1010**

**1013**

IP Anycast Network of Servers

Main Server

**1014**

Probes

...

**1020**

Internet

Device assigned the public IP that the Main server sees.

**1030**

End Client Device

**1040**

Figure 10

1100

PROCESSOR

1103

MEMORY

1104

1102

1105

DISPLAY

1106

INPUT

1107

NETWORK I/F

Figure 11

Europäisches
Patentamt
European
Patent Office
Office européen
des brevets

# EUROPEAN SEARCH REPORT

**Application Number**

EP 26 15 1488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIAN YUAN ET AL: "Detecting VPN Traffic in Real-Time with Active Probing", 2024 22ND INTERNATIONAL SYMPOSIUM ON NETWORK COMPUTING AND APPLICATIONS (NCA) IEEE, 24 October 2024 (2024-10-24), pages 132-139, XP034883591, DOI: 10.1109/NCA61908.2024.00030 [retrieved on 2025-04-02] * page 132, left-hand column, line 1 - page 133, right-hand column, line 7 * * page 133, right-hand column, line 44 - page 136, left-hand column, line 2 * * page 138, left-hand column, line 11 - page 138, right-hand column, line 24 * | 1-15 | INV. H04L9/40 H04L41/12 H04L43/12 ADD. H04L43/0864 H04L43/106 |
| X A | US 11 196 712 B1 (NORBUTAS EMANUELIS [LT]) 7 December 2021 (2021-12-07) * claims 1,3-5,8-9; figures 1, 2, 7, 8, 10 * * column 9, line 40 - line 49 * * column 12, line 29 - line 55 * * column 13, line 35 - line 44 * * column 16, line 46 - line 61 * * column 18, line 62 - column 19, line 11 * * column 21, line 17 - line 26 * * column 22, line 4 - line 20 * * column 24, line 61 - line 67 * * column 25, line 1 - line 11 * * column 25, line 11 - line 27 * * column 25, line 33 - line 43 * * column 26, line 6 - line 15 * * column 28, line 59 - column 29, line 3 * | 1-8, 11-14 9,10,15 | |

**TECHNICAL FIELDS SEARCHED (IPC)**

H04L

The present search report has been drawn up for all claims

| Place of search | Date of completion of the search | Examiner |
|---|---|---|
| Munich | 11 June 2026 | Sauzon, Guillaume |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................
& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 26 15 1488

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2026

| Patent document cited in search report | Publication date | Patent family member(s) | Publication date |
|---|---|---|---|
| US 11196712 B1 | 07-12-2021 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- BADPASS: Bots Taking ADvantage of Proxy as a Service.. **CHIAPPONI, E.** ; **DACIER, M.** ; **THONNARD, O.** ; **FANGAR, M.** ; **RIGAL, V.** Lecture Notes in Computer Science. Springer, 2022, vol. 13620